(19) Europäisches Patentamt
European Patent Office
Office européen des brevets

(11) **EP 4 063 558 A1**

(12) **EUROPEAN PATENT APPLICATION**
published in accordance with Art. 153(4) EPC

(43) Date of publication:
**28.09.2022 Bulletin 2022/39**

(21) Application number: **20889552.4**

(22) Date of filing: **18.11.2020**

(51) International Patent Classification (IPC):
***D06M 10/02*** (2006.01)    ***B29C 70/16*** (2006.01)
***D06M 11/74*** (2006.01)

(52) Cooperative Patent Classification (CPC):
**B29C 70/16; D06M 10/02; D06M 11/74**

(86) International application number:
**PCT/JP2020/042900**

(87) International publication number:
**WO 2021/100734 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2019  JP 2019210010**

(71) Applicant: **Nitta Corporation**
**Osaka-shi, Osaka 556-0022 (JP)**

(72) Inventors:
• **KOMUKAI Takuji**
**Osaka-shi, Osaka 556-0022 (JP)**
• **ONIZUKA Maki**
**Osaka-shi, Osaka 556-0022 (JP)**

(74) Representative: **Bandpay & Greuter**
**30, rue Notre-Dame des Victoires**
**75002 Paris (FR)**

(54) **COMPOSITE MATERIAL, CARBON FIBER-REINFORCED MOLDED BODY, AND METHOD FOR PRODUCING COMPOSITE MATERIAL**

(57)    Provided are a composite material capable of further enhancing property derived from CNTs adhered to carbon fibers, a carbon-fiber-reinforced molded article, and a method for manufacturing a composite material. In a composite material 10, a structure 14 including a plurality of carbon nanotubes 17 is formed on surfaces of carbon fibers 11 of a carbon fiber bundle 12 that constitutes the composite material 10. The carbon nanotubes 17 have a bent shape. The carbon nanotubes 17 adhere to the surfaces of the carbon fibers 11 which are curved surfaces in various postures, and another carbon nanotube 17 enters a space (gap) formed between the carbon nanotubes 17 and the surfaces of the carbon fibers 11, between the adhered carbon nanotubes 17, or the like. According to this, the structure 14 is formed by more carbon nanotubes 17.

FIG. 1

EP 4 063 558 A1

**Description**

Technical Field

The present invention relates to a composite material, a carbon-fiber-reinforced molded article, and a method for manufacturing a composite material.

Background Art

There is suggested a composite material including a structure that includes carbon fibers and a plurality of carbon nanotubes (hereinafter, referred to as "CNTs") adhered to surfaces of the carbon fibers (for example, PTL 1). In the structure of the composite material, the plurality of CNTs have a network structure in which the CNTs are connected to each other, and adhere to the surfaces of the carbon fibers. A carbon-fiber-reinforced molded article in which a resin is reinforced by the composite material as a reinforcement fiber includes the carbon fibers, and thus higher strength and rigidity are obtained in comparison to a resin alone, and has improved electrical conductivity, thermal conductivity, and a mechanical property which are derived from the CNTs.

Citation List

Patent Literature

PTL 1: JP-A-2013-76198

Summary of Invention

Technical Problem

The use of the carbon-fiber-reinforced molded article has been expanded to various fields such as aircrafts, automobiles, general industry, and sport equipment. In the carbon-fiber-reinforced molded article, requirements for the mechanical properties and the like have further increased. According to this, even in the composite material in which the plurality of CNTs have adhered to the surfaces of the carbon fibers, it is desired to enhance properties due to the CNTs.
An object of the invention is to provide a composite material capable of enhancing properties due to CNTs adhered to a carbon fiber, a carbon-fiber-reinforced molded article using the composite material, and a method for manufacturing the composite material.

Solution to Problem

According to an aspect of the invention, there is provided a composite material including: a carbon fiber bundle including a plurality of continuous carbon fibers; and a structure formed on each of the carbon fibers which includes a plurality of carbon nanotubes and has a network structure in which the carbon nanotubes are in direct contact with each other, and in which the carbon nanotubes directly adhere to surfaces of the carbon fibers. The carbon nanotubes have a bent shape including a bent portion, and a thickness of the structure is within a range of 50 nm to 200 nm.
According to another aspect of the invention, there is provided a method for manufacturing a composite material. The method includes: an ultrasonic process of applying ultrasonic vibration to a dispersion in which a plurality of carbon nanotubes having a bent shape including a bent portion are dispersed; and an adhesion process of immersing a carbon fiber bundle including a plurality of continuous carbon fibers in the dispersion to which the ultrasonic vibration is applied, and adhering the plurality of carbon nanotubes to the carbon fibers to form a structure on a surface of each of the carbon fibers. In the adhesion process, the carbon fiber bundle is immersed while being opened, the carbon fibers are traveled in the dispersion, and when a depth from a liquid surface of the dispersion in which the carbon fibers travel is set as $D$, a wavelength of a standing wave of ultrasonic vibration generated in the dispersion due to the ultrasonic process is set as $\lambda$, and $n$ is set as an integer of 1 or more, a relationship of $n \cdot \lambda/2 - \lambda/8 \leq D \leq n \cdot \lambda/2 + \lambda/8$ is satisfied.
According to still another aspect of the invention, there is provided a carbon-fiber-reinforced molded article including: a carbon fiber bundle including a plurality of continuous carbon fibers; a matrix resin that is cured in a state of being impregnated into the carbon fiber bundle; a composite region having a thickness within a range of 50 nm to 200 nm including a structure formed on each of the carbon fibers which includes a plurality of carbon nanotubes having a bent shape including a bent portion and has a network structure in which the carbon nanotubes are in direct contact with each other, and in which the carbon nanotubes directly adhere to surfaces of the carbon fibers, and the matrix resin that is cured in a state of being impregnated into the structure; and a cross-linking portion in which parts of the composite region between the carbon fibers are fixed to each other to cross-link the carbon fibers to each other.

Advantageous Effects of Invention

According to the invention, since a structure in which carbon nanotubes adhered to carbon fibers of a carbon fiber bundle are set to have a bent shape including a bent portion and which has a thickness within a range of 50 nm to 200 nm is provided, cross-linking due to coupling of composite regions in which a matrix resin is impregnated into the structure and is cured increase, and properties due to the carbon nanotubes can be enhanced.

According to the invention, when causing the carbon fibers to travel in a dispersion at a depth satisfying predetermined conditions, since the composite material is manufactured by causing the carbon nanotubes, which have a structure knitted like a non-woven fabric fiber and have the bent shape including the bent portion, to adhere to surfaces of the carbon fibers of the carbon fiber bundle, it is possible to produce the composite material in which the number of the carbon nanotubes adhered to the carbon fibers further increases, and properties due to the carbon nanotubes are further enhanced.

Brief Description of Drawings

Fig. 1 is an explanatory diagram illustrating a configuration of a composite material according to an embodiment.
Fig. 2 is an explanatory diagram illustrating an adhesion state of a sizing agent to CNT.
Fig. 3 is an explanatory diagram illustrating an adhesion state of the sizing agent in a contact portion where CNTs are in contact with each other.
Fig. 4 is an explanatory diagram illustrating a configuration of an adhesion device that causes CNTs to adhere to a carbon fiber.
Fig. 5 is an explanatory diagram illustrating a carbon fiber bundle in a state of being opened on a guide roller.
Fig. 6 is an explanatory diagram illustrating a passing position of the carbon fiber in a dispersion.
Fig. 7 is an explanatory diagram schematically illustrating a configuration of a prepreg.
Fig. 8 is an explanatory diagram schematically illustrating a carbon-fiber-reinforced molded article.
Fig. 9 is an explanatory diagram illustrating a state in which carbon fibers are cross-linked.
Fig. 10 is an explanatory diagram illustrating a measurement piece for measuring hardness of a composite region.
Fig. 11 is an explanatory diagram illustrating a manufacturing procedure of the measurement piece.
Fig. 12 is a SEM photograph showing a bent state of material CNTs used in examples.
Fig. 13 is a SEM photograph showing a surface of a structure in a state in which the sizing agent has adhered to surfaces of the CNTs.
Fig. 14 is a SEM photograph showing a state of the sizing agent adhered to the surfaces of the CNTs in an enlarged manner.
Fig. 15 is a SEM photograph showing a surface of a structure in which some voids formed by the CNTs are closed by the sizing agent.
Fig. 16 is a SEM photograph of a cross-section of a carbon fiber which shows a structure formed on surfaces of the carbon fibers.
Fig. 17 is a SEM photograph of the cross-section of the carbon fiber which shows the structure in an enlarged manner.
Fig. 18 is a SEM photograph showing a cross-section of a carbon-fiber-reinforced molded article.
Fig. 19 is a SEM photograph showing a cross-section of a portion where composite regions are coupled to each other.
Fig. 20 is a perspective view illustrating a test piece that is used for evaluation of bending fatigue properties.
Fig. 21 is a perspective view illustrating a device that is used in measurement of the bending fatigue properties.
Fig. 22 is an explanatory diagram illustrating a bent state of the test piece in the test.
Fig. 23 is a graph illustrating a relationship between the number of times of repetition and a stress amplitude.
Fig. 24 is a graph illustrating a relationship between a bending strain and a bending stress when a repetition frequency is 1 Hz.
Fig. 25 is a graph illustrating a relationship between the bending strain and the bending stress when the repetition frequency is 10 Hz.
Fig. 26 is a graph illustrating a relationship between the bending strain and the bending stress when the repetition frequency is 20 Hz.
Fig. 27 is a graph illustrating a difference in indentation hardness between Example 3 and Comparative Example 2.
Fig. 28 is a graph illustrating an average loading curve and an average unloading curve of each measurement piece in Example 3 and Comparative Example 2.

Description of Embodiments

[Composite Material]

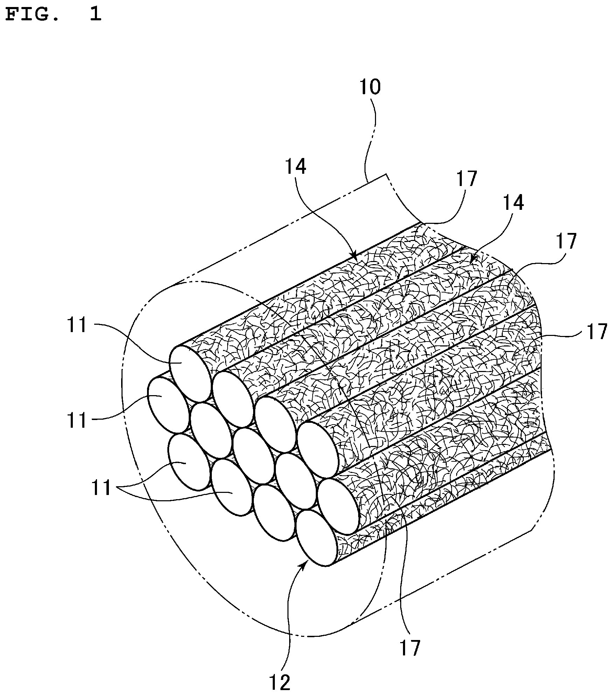

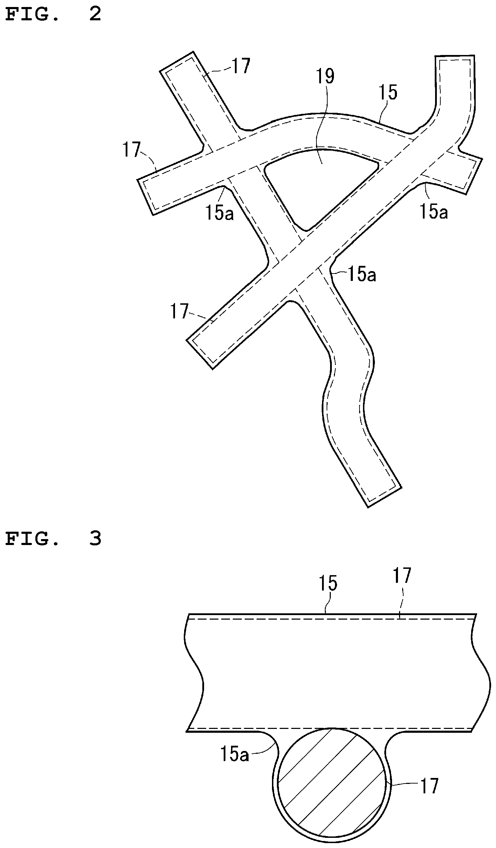

In Fig. 1, a composite material 10 includes a carbon fiber bundle 12 in which a plurality of continuous carbon fibers 11 are arranged. A structure 14 is formed on each of surfaces of the carbon fibers 11, and a sizing agent 15 (refer to Fig. 2) adheres to the structure 14.

The carbon fibers 11 which constitute the carbon fiber bundle 12 are not substantially entangled with each other, and a fiber axis direction of each of the carbon fibers 11 is aligned. The fiber axis direction is a direction (extension direction) of an axis of the carbon fiber 11. In this example, the carbon fiber bundle 12 is constituted by 12,000 carbon fibers 11. The number of the carbon fibers 11 which constitute the carbon fiber bundle 12 is not particularly limited, and may be set, for example, within a range of 10,000 to 100,000. Note that, in Fig. 1, only a dozen pieces of the carbon fibers 11 are drawn for convenience of explanation.

Entanglement of the carbon fibers 11 in the carbon fiber bundle 12 can be evaluated with the degree of disturbance of the carbon fibers 11. For example, the carbon fiber bundle 12 is observed with a scanning electron microscope (SEM) at a constant magnification, and lengths of a predetermined number of (for example, 10) carbon fibers 11 in an observation range (a predetermined length range of the carbon fiber bundle 12) are measured. The degree of disturbance of the carbon fibers 11 can be evaluated on the basis of a variation, a difference between a maximum value and a minimum value, and a standard deviation of the lengths which are obtained from the measurement results and relate to the predetermined number of carbon fibers 11. In addition, it can be determined that the carbon fibers 11 are not substantially entangled by measuring the degree of entanglement, for example, in conformity to a method of measuring the degree of entanglement in JIS L1013:2010 "Testing methods for man-made filament yarns". The smaller the measured degree of entanglement is, the less the carbon fibers 11 are entangled with each other in the carbon fiber bundle 12.

In the carbon fiber bundle 12 in which the carbon fibers 11 are not substantially entangled with each other, or are less entangled with each other, the carbon fibers 11 are likely to be uniformly opened. According to this, it is easy to cause a CNT 17 to uniformly adhere to the carbon fibers 11, a resin is uniformly impregnated into the carbon fiber bundle 12 when producing a prepreg or a carbon-fiber-reinforced molded article, and each of the carbon fibers 11 contributes to the strength.

As the carbon fibers 11, a PAN-based or pitch-based fiber obtained by baking an organic fiber such as polyacrylic nitrile, rayon, and pitch which are derived from petroleum, coal, and coal tar, and an organic fiber derived from wood or a plant fiber, and the like can be used without particular limitation. In addition, with regard to the diameter of the carbon fibers 11, there is no particular limitation, a fiber having a diameter in a range of approximately 5 to 20 $\mu$m can be preferably used, and a fiber having a diameter in a range of approximately 5 to 10 $\mu$m can be more preferably used. As the carbon fibers 11, a long fiber can be used, a length thereof is preferably 50 m or longer, more preferably in a range of 100 to 100,000 m, and still more preferably in a range of 100 to 10,000 m. Note that, when a prepreg or a carbon-fiber-reinforced molded article is formed, the carbon fibers 11 may be cut short.

As described above, the structure 14 is formed on the surface of each of the carbon fibers 11. In the structure 14, a plurality of carbon nanotubes (hereinafter, referred to as "CNTs") 17 are entangled. The CNTs 17 which constitute the structure 14 are uniformly dispersed and entangled across substantially the entire surface of each of the carbon fibers 11, and form a network structure in which the plurality of CNTs 17 are connected in a state of being entangled with each other. The connection stated here includes physical connection (simple contact) and chemical connection. The CNTs 17 come into direct contact with each other without intervening materials such as a dispersing agent including a surfactant, and adhesive therebetween.

Some of the CNTs 17 which constitute the structure 14 directly adhere and are fixed to the surfaces of the carbon fibers 11. According to this, the structure 14 directly adheres to the surfaces of the carbon fibers 11. A structure in which the CNTs 17 directly adhere to the surfaces of the carbon fibers 11 represents that the CNTs 17 directly adhere to the carbon fibers 11 in a state in which a dispersing agent such as a surfactant, adhesive, or the like is not interposed between the CNTs 17 and the surfaces of the carbon fibers 11, and adhesion (fixing) is obtained due to coupling by Van der Waals force. Since some of the CNTs 17 which constitute the structure 14 directly adhere to the surfaces of the carbon fibers 11, it enters a direct contact state in which the structure 14 comes into direct contact with the surfaces of the carbon fibers 11 without interposing the dispersing agent, the adhesive, or the like.

In addition, some of the CNTs 17 which constitute the structure 14 are entangled with other CNTs 17 and are fixed to the carbon fibers 11 without direct contact with the surfaces of the carbon fibers 11. In addition, some of the CNTs 17 directly adhere to the surfaces of the carbon fibers 11 and are entangled with other CNTs 17 to be fixed to the carbon fibers 11. In the following description, fixing of the CNTs 17 to the carbon fibers 11 is collectively referred to as adhesion to the carbon fibers 11. Note that, a state in which the CNTs 17 are entangled or intertwined includes a state in which some of the CNTs 17 are pressed against other CNTs 17.

As described above, in addition to direct adhesion with the surfaces of the carbon fibers 11, some of the CNTs 17 which constitute the structure 14 are fixed to the carbon fibers 11 by entanglement with other CNTs 17 which are not in direct contact with the surfaces of the carbon fibers 11, or the like. Accordingly, the structure 14 of this example includes more CNTs 17 than the CNTs which directly adhere to the surfaces of the carbon fibers as in the structure of the composite material of the related art. That is, the number of the CNTs 17 which adhere to the carbon fibers 11 further increases in comparison to the related art.

As described above, the plurality of CNTs 17 are connected to each other without intervening materials between surfaces, thereby constituting the structure 14. Accordingly, the composite material 10 exhibits performance of electric conductivity and thermal conductivity derived from the CNTs. In addition, since the CNTs 17 adhere to the surfaces of the carbon fibers 11 without intervening materials, the CNTs 17 constituting the structure 14 are less likely to be peeled off from the surfaces of the carbon fibers 11, and mechanical strength of the composite material 10 and a carbon-fiber-reinforced molded article including the composite material 10 is improved.

As to be described later, in the carbon-fiber-reinforced molded article, the carbon fiber bundle 12 constituted by the plurality of carbon fibers 11 on which the structure 14 is formed is impregnated with a matrix resin, and the matrix resin is cured. Since the structure 14 is impregnated with the matrix resin, the structure 14 of each of the carbon fibers 11 is fixed to the surface of the carbon fiber 11 and the matrix resin. According to this, it enters a state in which each of the carbon fibers 11 is strongly bonded to the matrix resin, and peeling strength between the composite material 10 and the matrix resin is improved. In addition, bonding with the matrix resin extends over the entire composite material 10, and thus a fiber reinforcement effect is obtained in the entirety of the carbon-fiber-reinforced molded article.

In addition, when an external force is applied to the carbon-fiber-reinforced molded article and displacement occurs at the inside of the carbon-fiber-reinforced molded article, displacement occurs in the carbon fiber 11 inside the carbon-fiber-reinforced molded article. Due to the displacement of the carbon fiber 11, the structure 14 is stretched, and a constraining effect is obtained due to a network structure of the CNTs 17. According to this, properties of the CNTs are exhibited, and thus an elastic modulus of the carbon-fiber-reinforced molded article can be raised.

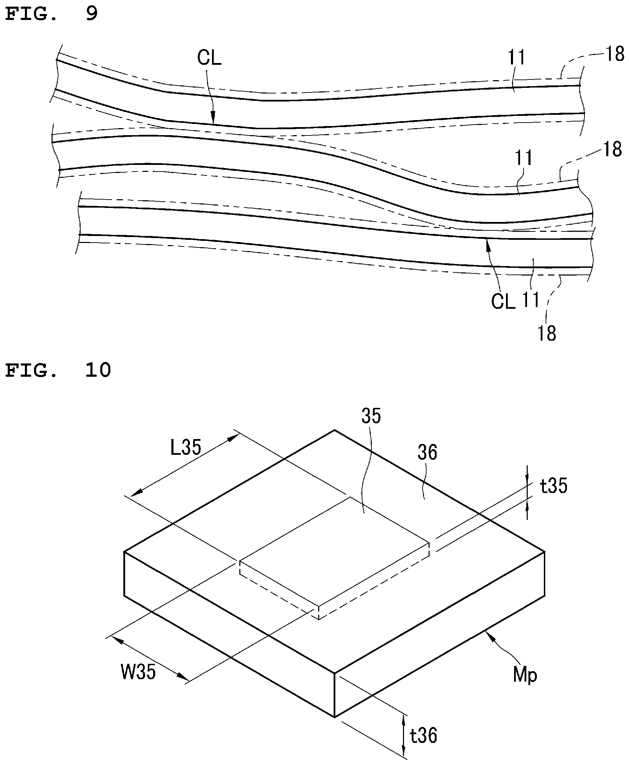

In addition, a region (hereinafter, referred to as "composite region") 18 (refer to Fig. 9), in which the CNTs 17 constituting the structure 14 is impregnated with the matrix resin and the matrix resin is cured, is formed at the periphery of the carbon fibers 11 inside the carbon-fiber-reinforced molded article. The composite region 18 efficiently absorbs mechanical energy applied from the outside. That is, in a case where energy such as vibration propagates between the carbon fibers 11, the energy of the propagating vibration is absorbed by friction of the composite region 18 at the periphery of the carbon fibers 11 and is damped. As a result, for example, vibration damping property (damping properties) of the carbon-fiber-reinforced molded article are improved.

The structure 14 that is formed on each of the plurality of carbon fibers 11 has an independent structure, and the structure 14 of one of the carbon fibers 11 does not share the same CNT 17 with the structure 14 of another carbon fiber 11. That is, the CNTs 17 contained in the structure 14 provided in the one carbon fiber 11 is not contained in the structure 14 provided in the other carbon fiber 11.

As illustrated in Fig. 2, the sizing agent 15 is fixed to surfaces of the CNTs 17 which constitute the structure 14. The sizing agent 15 covers the surfaces of the CNTs 17, and at a contact portion where the CNTs 17 are in contact with each other, the sizing agent 15 forms an inclusion portion 15a that wraps and covers the contact portion. Due to the inclusion portion 15a, a state in which the CNTs 17 are in contact with each other is made to be stronger, and the structure 14 is less likely to collapse.

In addition, in the structure 14, a void portion (mesh) 19 that is surrounded by a plurality of the CNTs 17 is formed due to the CNTs 17, but it is preferable that the sizing agent 15 does not close the void portion 19 so that impregnation of the matrix resin into the structure 14 is not hindered, and this is also true of this example . In order for the void portion 19 not to be closed, a volume of the sizing agent 15 is preferably set to be 30% or less of a volume of the CNTs 17 of the structure 14.

As illustrated in Fig. 3, at the inclusion portion 15a, the sizing agent 15 is fixed to the CNTs 17 in a state in which the sizing agent 15 does not enter between the CNTs 17 with which the sizing agent 15 is in contact, and thus the CNTs 17 are in direct contact with each other at a contact portion of the CNTs 17. The sizing agent 15 is formed from a reactive curing resin, a thermosetting resin, a cured article of a thermoplastic resin, or an uncured article. The sizing agent 15 is formed by performing a sizing treatment.

Note that, the sizing agent 15 is formed on the surfaces of the CNTs 17, and is different from the following fixing resin part that enters the inside of the structure 14 and fixes the CNTs 17 to the carbon fibers 11.

The CNTs 17 adhered to the carbon fibers 11 have a bent shape. The bent shape of the CNTs 17 is obtained because a bent portion is provided due to existence of a five-membered ring, a seven-membered ring, and the like of carbon in a graphite structure of the CNTs 17, and the bent shape is a shape from which the CNTs 17 can be evaluated to be curved, bent, or the like from observation with a SEM. For example, the bent shape of the CNTs 17 represents that the bent portion exists at least at one site per an average length of a use range of the CNTs 17 to be described later. Even in a case where the bent shape is long, the CNTs 17 having the bent shape adhere to the surfaces of the carbon fibers 11 which are curved surfaces in various postures. In addition, the CNTs 17 having the bent shape are likely to form a space (gap) between the surfaces of the carbon fibers 11 to which the CNTs 17 adhere, or between the adhered CNTs 17, and another CNT 17 enters the space. According to this, when using the CNTs 17 having the bent shape, the number of the CNTs 17 adhered to the carbon fibers 11 (the number of the CNTs 17 forming the structure 14) further increases in comparison to the case of using CNTs having a shape with high linearity.

The length of the CNTs 17 is preferably within a range of 0.1 to 10 $\mu$m. When the length is 0.1 $\mu$m or longer, the CNTs 17 can more reliably form the structure 14 in which the CNTs 17 are entangled and come into direct contact with each other or are directly connected to each other, and it is possible to more reliably form the space which the other CNT 17 enters as described above. In addition, when the length of the CNTs 17 is 10 $\mu$m or less, the CNTs 17 do not adhere between the carbon fibers 11. That is, as described above, a CNT 17 that is contained in the structure 14 provided in one carbon fiber 11 is not contained in the structure 14 provided in another carbon fiber 11.

The length of the CNTs 17 is more preferably within a range of 0.2 to 5 $\mu$m. When the length of the CNTs 17 is 0.2 $\mu$m or longer, the number of the CNTs 17 adhered increases and the structure 14 can be made thick. When the length is 5 $\mu$m or less, when causing the CNTs 17 to adhere to the carbon fibers 11, the CNTs 17 are less likely to aggregate, and the CNTs 17 are likely to be more evenly dispersed. As a result, the CNTs 17 more evenly adhere to the carbon fibers 11.

Note that, with regard to the CNTs adhered to the carbon fibers 11, mixing-in of CNTs with high linearity or mixing-in of CNTs having a length out of the above-described range are not excluded. For example, even in a case where mixing-in occurs, since the CNTs with high linearity enter a space formed by the CNTs 17, it is possible to increase the number of the CNTs adhered to the carbon fibers 11.

It is preferable that an average diameter of the CNTs 17 is within a range of 1 nm to 15 nm, and more preferably a range of 3 nm to 10 nm. When the diameter is 15 nm or less, the CNTs 17 are very flexible and are likely to adhere to the carbon fibers 11 along the surfaces thereof, and are likely to be fixed to the carbon fibers 11 in a state of being entangled with other CNTs 17. In addition to this, formation of the structure 14 becomes more reliable. In addition, when the diameter is 10 nm or less, coupling between the CNTs 17 constituting the structure 14 becomes strong. Note that, the diameter of the CNTs 17 is set as a value measured by using a transmission electron microscope (TEM) photograph. The CNTs 17 may be a single-layer structure or a multi-layer structure, but the multi-layer structure is preferable.

As described above, when the CNTs 17 are set to have the bent shape, it is possible to further increase the number of the CNTs 17 adhered to the carbon fibers 11 in comparison to the case of using CNTs with high linearity, and it is possible to increase the thickness of the structure 14. In addition, the structure 14 in which the CNTs 17 are knitted like a non-woven fabric fiber is formed. As a result, the mechanical strength is raised, and in a case where an external force is applied to the carbon-fiber-reinforced molded article and the carbon fibers 11 are displaced, a constraining effect due to the structure 14 is large, and thus the elastic modulus can be further raised. In addition, a mechanical energy absorbing effect due to the composite region 18 at the periphery of the carbon fibers 11 also increases, and the vibration damping property of the carbon-fiber-reinforced molded article can be further enhanced.

As an example of the mechanical strength that is improved, an improvement in durability against repetitive bending can be exemplified. As described above, in the carbon-fiber-reinforced molded article using the composite material 10 in which the CNTs 17 adhered to the surfaces of the carbon fibers 11, it is considered that the durability against the repetitive bending can be enhanced by a peeling strength improving effect due to inclusion of the structure 14, and the mechanical energy absorbing effect due to the composite region 18. The peeling strength improving effect and the mechanical energy absorbing effect can be further enhanced in proportion to an increase in the number of the CNTs 17 adhered to the surfaces of the carbon fibers 11, and thus the durability against the repetitive bending becomes high. The composite material 10 having the above-described properties is suitable as a spring material of a coil spring or a leaf spring, or the like to which a load is repetitively applied, and thus the carbon-fiber-reinforced molded article containing the composite material 10 is applicable to various springs such as the coil spring and the leaf spring.

With regard to the carbon-fiber-reinforced molded article including the composite material 10, at a three-point bending fatigue test to be described later in detail, it is preferable that the number of times of repetition of pressing until a load at the time of pressing performed when a stress amplitude is within a range of 1,100 to 1,300 MPa reaches zero is within a range of 92,000 to 1,000,000.

The number of the CNTs 17 adhered to the carbon fibers 11 can be evaluated with the thickness of the structure 14 (a length in a diameter direction of the carbon fibers 11). For example, the thickness of each portion of the structure 14 can be measured as follows. Specifically, a part of the structure 14 on the surfaces of the carbon fibers 11 is bonded to a cellophane tape or the like and is peeled off, and a cross-section of the structure 14 remaining on the surfaces of the carbon fibers 11 is measured with a SEM or the like to acquire the thickness. In order to almost uniformly cover a measurement range of a predetermined length along a fiber axis direction of the carbon fibers 11, the thickness of the structure 14 is measured at ten sites in the measurement range, but an average is set as the thickness of the structure 14. For example, the length of the measurement range is set to a length that is five times an upper limit of a range of the length of the CNTs 17 described above.

The thickness (average) of the structure 14 which is obtained as described above is within a range of 10 nm to 300 nm, preferably within a range of 15 nm to 200 nm, and more preferably 50 nm to 200 nm. When the thickness of the structure 14 is 200 nm or less, an impregnation property with a resin between the carbon fibers 11 is satisfactory.

In addition, an adhesion state of the CNTs 17 to the carbon fibers 11 can be evaluated by using a weight ratio that is the weight of the CNTs 17 adhered per unit weight of the carbon fibers 11. When the weight (hereinafter, referred to as "CF weight") of only the carbon fibers 11 having a predetermined length is set as Wa, and the weight (hereinafter, referred to as "CNT weight") of the CNTs 17 adhered to the carbon fibers 11 is set as Wb, the weight ratio R is obtained as "R = Wb/ (Wa + Wb)".

It is preferable that the CNTs 17 uniformly adhere to the carbon fibers 11, and it is preferable that the CNTs 17 adhere to the carbon fibers 11 to cover the surfaces thereof. The adhesion state including uniformity of the CNTs 17 with respect to the carbon fiber 11 is observed with a SEM, and an obtained image can be visually evaluated. In this case, it is preferable to make an evaluation by observing a plurality of sites (for example, 10 sites) to approximately evenly cover a range of a predetermined length (for example, a range of 1 cm, 10 cm, or 1 m) of the carbon fibers 11 along the fiber axis direction.

In addition, uniformity of adhesion of the CNTs 17 to the carbon fibers 11 can be evaluated by using the weight ratio. The weight ratio R is preferably 0.0005 to 0.01.

When the weight ratio R is 0.0005 or more, in the carbon-fiber-reinforced molded article, the great constraining effect with the structure 14 and a great mechanical energy absorbing effect in the composite region 18 as described above can be reliably obtained, and properties derived from the CNTs are improved. When the weight ratio R is 0.01 or less, resin impregnation of the structure 14 with the matrix resin is reliably performed. In addition, the weight ratio R is more preferably 0.001 to 0.01. When the weight ratio R is 0.001 or more, the structure 14 (CNTs 17) more reliably functions between almost all carbon fibers 11. When the weight ratio R is 0.01 or less, resin impregnation of the structure 14 with the matrix resin is reliably performed, and even in a case where a ratio of the matrix resin in the carbon-fiber-reinforced molded article is low, the structure 14 more reliably functions. In addition, the weight ratio R is still more preferably 0.001 to 0.005. When the weight ratio R is 0.005 or less, even in a case where the ratio of the matrix resin in the carbon-fiber-reinforced molded article is low, the structure 14 more reliably functions.

It is preferable that a standard deviation s of respective weight ratios R of ten measurement sites set within a range (hereinafter, referred to as "evaluation range") of 1 m in the length of one piece of the carbon fibers 11 is 0.0005 or less, and more preferably 0.0002 or less. In addition, a ratio of the standard deviation s to an average of the weight ratio R is preferably 40% or less, and more preferably 15% or less. It is preferable that the ten measurement sites are set to almost uniformly cover the evaluation range. The standard deviation s becomes an index of a variation in the adhesion number (adhesion amount) of the CNTs 17 adhered to the carbon fibers 11 and the thickness of the structure 14, and the smaller the variation is, the smaller a value of the standard deviation is. Accordingly, as the standard deviation s is smaller, it is more preferable. The variation in the adhesion number of the CNTs 17 and the thickness of the structure 14 is exhibited as a difference of properties derived from the CNTs in the composite material 10 and the carbon-fiber-reinforced molded article using the composite material 10. When the standard deviation s is 0.0005 or less, the properties derived from the CNTs in the composite material 10 and the carbon-fiber-reinforced molded article are more reliably exhibited, and when the standard deviation s is 0.0002 or less, the properties derived from the CNTs are sufficiently and reliably exhibited. Note that, the standard deviation s is obtained by Expression (1). A value n in Expression (1) represents the number of measurement sites (n = 10 in this example), a value Ri represents a weight ratio of the measurement sites, and a value Ra represents an average of the weight ratio.

[Formula 1]

$$s = \sqrt{\frac{1}{n} \sum_{i=1}^{n} (Ri - Ra)^2} \qquad \cdots (1)$$

The weight ratio R is obtained as follows by cutting the carbon fiber bundle 12 (for example, approximately 12,000 carbon fibers 11) by approximately 3 mm with respect to a measurement portion where the weight ratio R is desired to be obtained as a measurement sample.

(1) The measurement sample is put into a solution (hereinafter, referred to as "measurement solution") that becomes a dispersion medium of the CNTs 17. As the measurement liquid, for example, a solution obtained by putting a dispersion agent into acetone is used.

(2) A difference between the weight of the measurement solution before putting the measurement sample and the weight of the measurement solution including the measurement sample is measured, and the difference is set as the weight of the measurement sample, that is, the sum (Wa + Wb) of the CF weight Wa of the carbon fibers 11 and the CNT weight Wb of the CNTs 17 adhered to the carbon fibers 11.

(3) Ultrasonic vibration is applied to the measurement solution including the measurement sample to completely separate the CNTs 17 adhered to the carbon fibers 11 from the carbon fibers 11 and to disperse the CNTs 17 in the measurement solution.

(4) Absorbance (transmittance) of the measurement solution in which the CNTs 17 are dispersed is measured by using an absorption photometer. The concentration of the CNTs 17 in the measurement solution (hereinafter, referred to as "CNT concentration") is obtained from a measurement result by the absorption photometer and a calibration curve created in advance. The CNT concentration is a weight percent concentration given as "$C = W2/(W1 + W2)$" when a value of the CNT concentration is set as C, the weight of the measurement solution is set as W1, and the weight of the CNTs 17 included in the measurement solution is set as W2.

(5) The weight (Wb) of the CNTs 17 in the measurement solution is obtained from the obtained CNT concentration and the weight of the measurement solution before putting the measurement sample.

(6) The weight ratio R (= Wb/(Wa + Wb)) is calculated from the sum (Wa + Wb) of the CF weight Wa and the CNT weight Wb which is obtained in (2), and the weight (Wb) of the CNTs 17.

In measurement of the absorbance, a spectrophotometer (for example, SolidSpec-3700 manufactured by SHIMADZU CORPORATION, or the like) can be used, and as a measurement wavelength, for example, 500 nm or the like may be used. In addition, in the measurement, the measurement solution is preferably accommodated in a quartz cell. In addition, absorbance of a dispersion medium that does not contain impurities other than the dispersion agent may be measured as a reference, and the concentration C of the CNTs 17 can be obtained by using a difference between the absorbance of the measurement solution in which the CNTs 17 are dispersed and the reference. Note that, in the measurement of the weight ratio R, an article obtained by removing a first sizing agent from the carbon fiber bundle 12 may be used, or an article before the removal may be used.

In a case of evaluating uniformity by using the weight ratio R, 10 sites of measurement portions are set to almost uniformly cover an evaluation range (for example, a length of 1 m) of the carbon fiber bundle 12 to be evaluated. With regard to the 10 sites of measurement portions, both ends of the evaluation range and eight sites between the ends are set, and the weight ratio R is obtained with respect to each of the measurement portions in the above-described procedure.

[Method for Manufacturing Composite Material]

In order to form the structure 14 by causing the CNTs 17 to adhere to each of the carbon fibers 11 in the carbon fiber bundle 12, the carbon fiber bundle 12 is immersed in a CNT isolated dispersion (hereinafter, simply referred to as "dispersion") in which the CNTs 17 are isolated and dispersed, and mechanical energy is applied to the dispersion. The term "isolated and dispersed" represents a state in which the CNTs 17 are physically separated one by one and are dispersed in a dispersion medium without entanglement, and a state in which a ratio of an aggregate in which two or more CNTs 17 are aggregated in a bundle form is 10% or less. Here, when the ratio of the aggregate is 10% or more, aggregation of the CNTs 17 in the dispersion medium is promoted, and adhesion of the CNTs 17 to the carbon fibers 11 is inhibited.

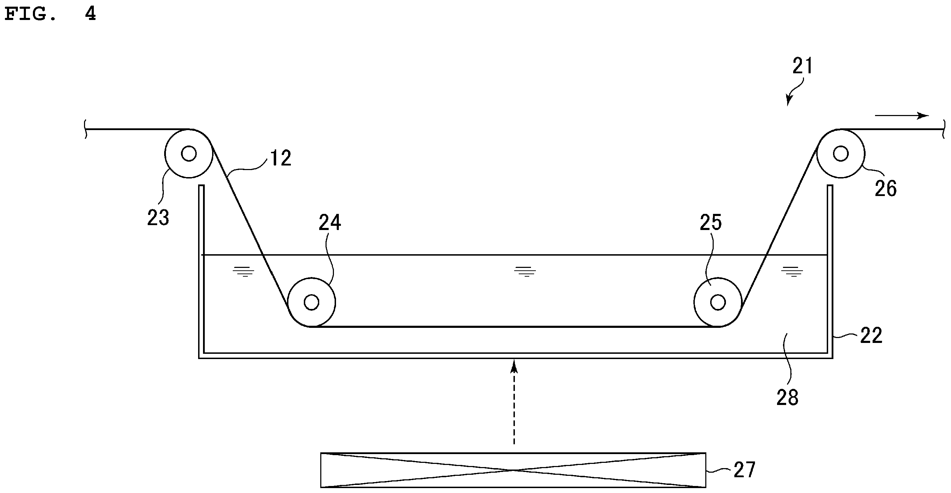

As illustrated in Fig. 4, as an example, an adhesion device 21 includes a CNT adhesion tank 22, guide rollers 23 to 26, an ultrasonic wave generator 27, a travelling mechanism (not illustrated) that causes the carbon fiber bundle 12 to travel at a constant speed, and the like. A dispersion 28 is stored in the CNT adhesion tank 22. The ultrasonic wave generator 27 applies ultrasonic waves to the dispersion 28 in the CNT adhesion tank 22 from a lower side of the CNT adhesion tank 22.

The carbon fiber bundle 12 having a long length (for example, approximately 100 m) in which the structure 14 is not formed is continuously supplied to the adhesion device 21. The carbon fiber bundle 12 that is supplied is wound around the guide rollers 23 to 26 in this order, and travels at a constant speed by the travelling mechanism. The carbon fiber bundle 12 in which the sizing agent does not adhere to the carbon fibers 11 is supplied to the adhesion device 21. Note that, the sizing agent stated here represents an object adhered to the surfaces of the carbon fibers 11 to prevent entanglement of the carbon fibers 11, and the like, and is different from the sizing agent 15 and the fixing resin part.

The carbon fiber bundle 12 is wound around the guide rollers 23 to 26 in an opened state. Appropriate tension acts on the carbon fiber bundle 12 wound around the guide rollers 23 to 26, and thus the carbon fibers 11 are less likely to be entangled with each other. It is preferable that the winding of the carbon fiber bundle 12 around the guide rollers 24 to 26 is set to a smaller winding angle (90° or less).

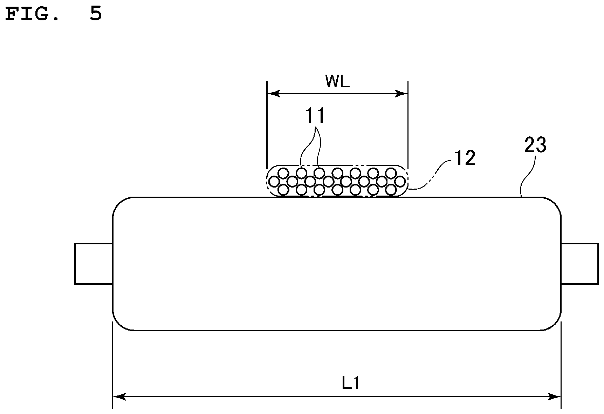

Any of the guide rollers 23 to 26 is a flat roller. As illustrated in Fig. 5, a roller length (a length in an axial direction) L1 of the guide roller 23 is set to be sufficiently larger than a width WL of the carbon fiber bundle 12 that is opened. With regard to the guide rollers 24 to 26, as in the guide roller 23, the roller length is set to be sufficiently larger than the width WL of the opened carbon fiber bundle 12. For example, the guide rollers 23 to 26 have the same size, and the roller length L1 is set to 100 mm, and a diameter (external diameter) of the rollers is set to 50 mm. In the opened carbon fiber bundle 12, a plurality of the carbon fibers 11 are aligned in the thickness direction (a diameter direction of the guide rollers).

Among the guide rollers 23 to 26, the guide rollers 24 and 25 are disposed in the CNT adhesion tank 22. According to this, the carbon fiber bundle 12 linearly travels between the guide rollers 24 and 25 in the dispersion 28 at a constant depth. A travelling speed of the carbon fiber bundle 12 is preferably set within a range of 0.5 to 100 m/minute. The higher the travelling speed of the carbon fiber bundle 12 is, the further productivity is improved. The lower the travelling speed is, the more effective for uniform adhesion of the CNTs 17, and more effective for suppression of entanglement of the carbon fibers 11. In addition, the less entanglement between the carbon fibers 11 is, the further uniformity of adhesion of the CNTs 17 to the carbon fibers 11 is raised. When the travelling speed of the carbon fiber bundle 12 is 100 m/minute or less, entanglement between the carbon fibers 11 is more effectively suppressed, and adhesion uniformity of the CNTs 17 can be further raised. In addition, the travelling speed of the carbon fiber bundle 12 is more preferably set within a range of 5 to 50 m/minute.

The ultrasonic wave generator 27 applies ultrasonic vibration as mechanical energy to the dispersion 28. According to this, in the dispersion 28, a reversible reaction state in which a dispersion state in which the CNTs 17 are dispersed and an aggregation state in which the CNTs 17 are aggregated vary alternately is formed. When the carbon fiber bundle 12 is caused to pass through the dispersion 28 that is in the reversible reaction state, when transitioning from the dispersion state to the aggregation state, the CNTs 17 adhere to the carbon fibers 11 due to Van der Walls force. The mass of the carbon fibers 11 is as large as 100,000 or more times the mass of the CNTs 17, energy necessary for detachment of the adhered CNTs 17 is more than energy due to the ultrasonic vibration. According to this, the CNTs 17 adhered once to the carbon fibers 11 are not peeled off from the carbon fibers 11 by the ultrasonic vibration after adhesion. Note that, since the mass is very small, the dispersion state and the aggregation state alternately vary between the CNTs 17 due to the ultrasonic vibration.

When transition from the dispersion state to the aggregation state is repetitively performed, a plurality of CNTs 17 adhere to each of the carbon fibers 11, and the structure 14 is formed. As described above, when using the CNTs 17 having a bent shape, other CNTs 17 enter a space formed between the CNTs 17 and the surfaces of the carbon fibers 11 to which the CNTs adhere, between the adhered CNTs 17, or the like, and thus more CNTs 17 adhere to the carbon fibers 11 and the structure 14 is formed.

A frequency of the ultrasonic vibration applied to the dispersion 28 is preferably 40 to 950 kHz. When the frequency is 40 kHz or higher, entanglement between the carbon fibers 11 in the carbon fiber bundle 12 is suppressed. In addition, when the frequency is 950 kHz or lower, the CNTs 17 adhere to the carbon fibers 11 in a satisfactory manner. In order to further reduce entanglement of the carbon fibers 11, the frequency of the ultrasonic vibration is preferably 100 kHz or higher, and more preferably 130 kHz or higher. In addition, the frequency of the ultrasonic vibration is more preferably 430 kHz or lower.

In addition, the present inventors have found that the number of the CNTs 17 adhered to the carbon fibers 11 becomes almost the maximum while securing uniformity of adhesion of the CNTs 17 to the carbon fibers 11 when the number of times of transition from the dispersion state to the aggregation state in the CNTs 17 reaches 65,000. Note that, the maximum value of the number of the CNTs 17 adhered varies in accordance with a CNT concentration of the dispersion 28, and increases as the CNT concentration of the dispersion 28 is higher. However, when the CNT concentration of the dispersion 28 becomes a high concentration at which the CNTs 17 cannot take a dispersion state when applying the ultrasonic vibration, adhesion of the CNTs 17 to the carbon fibers 11 cannot be performed.

According to this, it is preferable to determine the travelling speed of the carbon fiber bundle 12, a travelling distance of the carbon fiber bundle 12 in the dispersion 28 (an interval between the guide rollers 24 and 25), and the frequency of the ultrasonic vibration that is applied to the dispersion 28 so that the length of a period during which the carbon fiber bundle 12 is travelling in the dispersion 28, that is, time (hereinafter, referred to as "immersion time") for which the carbon fiber bundle 12 is travelling between the guide rollers 24 and 25 becomes 65,000 or more times a cycle of the ultrasonic vibration applied to the dispersion 28. That is, it is preferable to satisfy "Ts ≥ 65,000/fs", where fs (Hz) represents the frequency of the ultrasonic vibration, and Ts (second) represents the immersion times. For example, when the frequency of the ultrasonic vibration is 130 kHz and the distance along which the carbon fiber bundle 12 travels in the dispersion 28 is 0.1 m, the travelling speed of the carbon fiber bundle 12 can be set to 12 m/minute or less. In addition, even in a case where the carbon fiber bundle 12 is immersed in the dispersion 28 in a plurality of times in a division manner, when a total number of immersion times is set to 65,000 or more times the cycle of the ultrasonic vibration, the number of the CNTs 17 adhered can be almost the maximum.

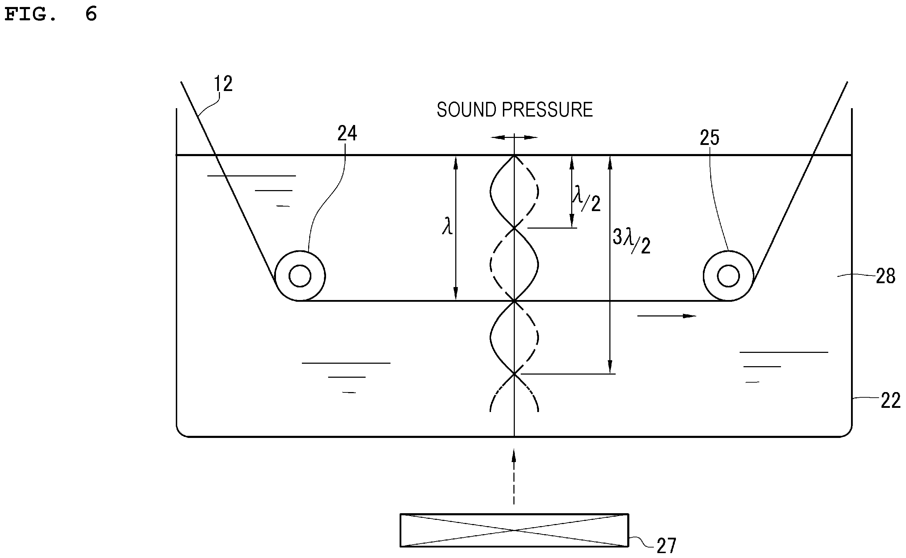

As schematically illustrated in Fig. 6, a standing wave in which a distribution of a sound pressure (amplitude) is determined is generated in the dispersion 28 inside the CNT adhesion tank 22 due to the ultrasonic vibration applied from the ultrasonic wave generator 27. In the adhesion device 21, positions of the guide rollers 24 and 25 in a depth direction are adjusted so that the carbon fiber bundle 12 travels in the dispersion 28 at a depth at which a standing wave node of the ultrasonic vibration, that is, a sound pressure becomes the minimum. Accordingly, a depth from a liquid surface of the dispersion 28 at which the carbon fiber bundle 12 travels in the dispersion 28 is set as D, a wavelength of a standing wave of ultrasonic vibration generated in the dispersion 28 is set as λ, and n is set as an integer of 1 or more, these values are determined to satisfy a relationship of "D=n · (λ/2) ". Note that, the wavelength λ of the standing wave can be obtained on the basis of a sound speed in the dispersion 28 and a frequency of the ultrasonic vibration applied from the ultrasonic wave generator 27.

As described above, through adjustment of the depth of the carbon fiber bundle 12 that travels in the dispersion 28, vibration of the carbon fibers 11 due to the sound pressure is suppressed, thread disorder due to thread sagging can be prevented, scraping between the carbon fibers 11 or between the CNTs 14 adhered to surfaces of the carbon fibers 11 can be suppressed, and the structure 14 having a large thickness can be formed. In addition, since scraping can be suppressed, even when the thickness of the structure 14 is large, a variation in the weight ratio R can be suppressed, and the above-described standard deviation s decreases. Note that, the depth at which the carbon fiber bundle 12 travels in the dispersion 28 may slightly deviate from the standing wave node, and in this case, the depth is preferably set within range (n ·λ/2 - λ/8 ≤ D ≤ n ·λ/2 + λ/8) that is equal to or larger than n·λ/2 - λ/8 and equal to or less than n·λ/2 + λ/8. According to this, it is possible to set the thread disorder of the carbon fibers 11 due to thread sagging in a permissible range.

The carbon fiber bundle 12 is taken out from the dispersion 28 and is dried. A sizing treatment and drying are sequentially performed with respect to the dried carbon fiber bundle 12, and thus the sizing agent 15 is applied to the structure 14. The sizing treatment can be performed by a typical method.

The sizing agent 15 is not particularly limited, and various reactive curing resins, thermosetting resins, thermoplastic resins, and the like can be used as described above. Examples of the thermosetting resins include an epoxy resin, a phenol resin, a melamine resin, a urea resin, unsaturated polyester, an alkyd resin, a thermosetting polyimide, a resin including a reactive group, and the like. In addition, Examples of the thermoplastic resin include general-purpose resins such as polyethylene, polypropylene, polystyrene, an acrylonitrile/styrene (AS) resin, an acrylonitrile/butadiene/styrene (ABS) resin, a methacrylic resin (PMMA or the like), and vinyl chloride, engineering plastics such as polyamide, polyacetal, polyethylene terephthalate, ultrahigh molecular weight polyethylene, and polycarbonate, and super engineering plastics such as polyphenylene sulfide, polyether ether ketone, liquid crystal polymer, polytetrafluoroethylene, polyetherimide, polyarylate, and polyimide. In the sizing treatment, it is preferable to use a solution in which a resin that becomes the sizing agent 15 is dissolved, and for example, the solution is applied to the carbon fiber bundle 12 to cause the sizing agent 15 to adhere to the CNTs 17 of the structure 14.

[Dispersion]

For example, the dispersion 28 that is used when causing the CNTs 17 to adhere to the carbon fibers 11 is prepared as follows. A long CNT (hereinafter, referred to as "material CNT") is added to a dispersion medium, the material CNT is cut by a homogenizer, a shearing force, an ultrasonic disperse, or the like to obtain the CNTs 17 having a desired length, and to realize dispersion uniformity of the CNTs 17.

As the dispersion medium, water, alcohols such as ethanol, methanol and isopropyl alcohol, organic solvents such as toluene, acetone, tetrahydrofuran (THF), methyl ethyl ketone (MEK), hexane, normal hexane, ethyl ether, xylene, methyl acetate, and ethyl acetate, and a mixed solution containing these materials in arbitrary ratios can be used. The dispersion 28 does not contain a dispersing agent and adhesive.

A material CNT that becomes a source of the CNTs 17 having a bent shape as described above may also have a bent shape. In the material CNT, it is preferable that diameters of individual material CNTs are arranged. With regard to the material CNT, even when a length of each CNT generated from cutting is long, it is preferable that the CNT can be isolated and dispersed. According to this, the dispersion 28 in which the CNTs 17 satisfying the above-described length condition are isolated and dispersed is easily obtained.

In the composite material 10 in this example, as described above, since CNTs having the bent shape as the CNTs 17 are caused to adhere, other CNT 17 enters a space formed between the CNTs 17 and the surfaces of the carbon fibers 11 to which the CNTs 17 adhere, between the adhered CNTs 17, or the like. According to this, more CNTs 17 adhere to the carbon fibers 11. In addition, the CNTs 17 strongly adhere to the carbon fibers 11 and the structure 14 is formed, and thus the CNTs 17 are less likely to be peeled off from the carbon fibers 11. In addition, in the carbon-fiber-reinforced molded article manufactured by using the composite material 10, the properties due to the CNTs are further enhanced.

As described above, in the carbon-fiber-reinforced molded article manufactured by using the composite material 10 as described above, the vibration damping property (damping properties) and a variation property of the elastic modulus are further improved in comparison to a carbon-fiber-reinforced molded article using a composite material in the related art. With regard to the variation property of the elastic modulus, an increase in the elastic modulus of the carbon-fiber-reinforced molded article is suppressed with respect to an increase in a collision speed to the carbon-fiber-reinforced molded article.

A concentration of the CNTs 17 in the dispersion 28 is preferably within a range of 0.003 to 3 wt%. The concentration of the CNTs 17 in the dispersion 28 is more preferably 0.005 to 0.5 wt%.

[Prepreg]

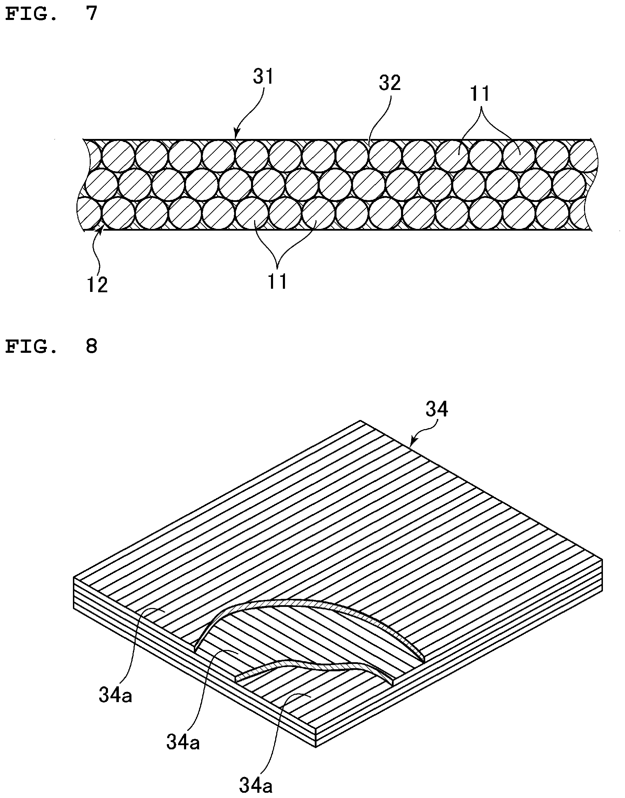

In Fig. 7, a prepreg 31 includes the carbon fibers 11 in which the structure 14 of the carbon fiber bundle 12 is formed, and an uncured matrix resin 32 that is impregnated into the carbon fiber bundle 12. The prepreg 31 is formed by impregnating the opened composite material 10 with the matrix resin 32, and is formed in a strip shape on which a plurality of the carbon fibers 11 are arranged in a thickness direction. In the composite material 10, entanglement between the carbon fibers 11 in the carbon fiber bundle 12 substantially does not exist, and thus when producing the prepreg 31, the carbon fibers 11 are likely to spread uniformly. The fiber axis direction of each of the carbon fibers 11 of the prepreg 31 is aligned in the same direction (a direction perpendicular to a paper surface in Fig. 7). The prepreg 31 can be made wide by arranging a plurality of the opened composite materials 10 in a line in a width direction (opened direction).

As the matrix resin 32, various thermosetting resins or thermoplastic resins can be used without particular limitation. Examples of the thermosetting resins include an epoxy resin, a phenol resin, a melamine resin, a urea resin, unsaturated polyester, an alkyd resin, thermosetting polyimide, a cyanate ester resin, a bismaleimide resin, a vinyl ester resin, and the like. In addition, examples of the thermoplastic resins include general-purpose resins such as polyethylene, polypropylene, polyvinyl chloride, polystyrene, an acrylonitrile/styrene (AS) resin, an acrylonitrile/butadiene/styrene (ABS) resin, and a methacrylic resin (PMMA or the like), engineering plastics such as polyamide, polyacetal, polyethylene terephthalate, ultrahigh molecular weight polyethylene, polycarbonate, and a phenoxy resin, and super engineering plastics such as polyphenylene sulfide, polyether ether ketone, polyether ketone ketone, liquid crystal polymer, polytetrafluoroethylene, polyetherimide, polyarylate, and polyimide.

[Carbon-Fiber-Reinforced Molded Article]

The carbon-fiber-reinforced molded article is manufactured by heating and curing the matrix resin 32 while pressing the prepreg 31. When pressing and heating a laminated body obtained by laminating a plurality of sheets of the prepregs 31, a carbon-fiber-reinforced molded article in which the laminated body is integrally formed can be also obtained. In this case, a fiber axis direction of the carbon fibers 11 in the laminated body can be set to an arbitrary direction for every layer corresponding to the prepreg 31. In a carbon-fiber-reinforced molded article 34 illustrated in Fig. 8, in a plurality of layers 34a corresponding to the prepreg 31, fiber axis directions of the carbon fibers 11 are orthogonal to each other in upper and lower layers 34a. As a heating and pressing method, a press molding method, an autoclave molding method, a bagging molding method, a sheet winding method, an internal pressure molding method, and the like can be used. In addition, the carbon-fiber-reinforced molded article may be manufactured directly from the carbon fiber bundle 12 and the matrix resin by a hand lay-up method, a filament winding method, a pultrusion molding method, and the like which do not use the prepreg 31. A volume content rate of the matrix resin 32 is preferably 10% to 40%, and more preferably 15% to 33%. The matrix resin 32 preferably has an elastic modulus of approximately 2 to 5 GPa.

In the carbon-fiber-reinforced molded article using the above-described composite material 10, as illustrated in Fig. 9, due to a cross-linking portion CL in which parts of the composite region 18 between the carbon fibers 11 are fixed to each other, a cross-linking structure in which the carbon fibers 11 are cross-linked is provided. As described above, the composite region 18 is a region formed from the structure 14 and the matrix resin that is impregnated into the structure 14 and is cured. The composite region 18 has higher hardness in comparison to a cured matrix resin alone, and has high elasticity, that is, a large elastic limit. In addition, the composite region 18 has higher wear resistance in comparison to the matrix resin. Due to mutual coupling of a plurality of the composite regions 18, coupling between the carbon fibers 11 becomes strong, and resistance against repetitive bending of the carbon-fiber-reinforced molded article using the composite material 10 is improved.

Since the cross-linking structure is formed in a case where a distance between the carbon fibers 11 is short to a certain extent in which a plurality of the structures 14 come into contact with each other, the larger the thickness of the structure 14 is, the more advantageous because the more cross-links occur. However, the thickness of the structure 14 is preferably set to at most 300 nm or less from the viewpoint of securing quality stability by a uniform thickness, the viewpoint of preventing detachment from the carbon fibers, and the like. Particularly, the thickness of the structure 14 may be set within a range of 50 nm to 200 nm. In addition, in a case where the carbon fibers 11 are set to a fabric shape, the cross-linking portion CL in which the composite regions 18 are fixed to each other increases, and the effect due to the cross-linking structure increases.

In the composite region 18, Martens hardness of the composite region 18 which is measured by a nano-indentation (indentation) method in conformity to ISO 14577:2015 is preferably greater than Martens hardness (hereinafter, referred to as "reference Martens hardness") of the matrix resin alone by 10% or more, and more preferably by 30% or more for obtaining a better effect. In addition, the amount of plastic deformation of the composite region 18 which is measured by the nano-indentation method conforming to ISO 14577 is preferably 70% or less of the amount of plastic deformation (hereinafter, referred to as "reference amount of plastic deformation") of the matrix resin alone.

In a case where the Martens hardness and the amount of plastic deformation of the composite region 18 can be directly measured from the composite region 18, the values may be used, but this is not realistic. Here, as illustrated in Fig. 10, a measurement piece Mp including a measurement layer 35 is prepared under the same conditions (the density of the CNTs 17, the kind of the matrix resin, and a curing condition) as in the composite region 18 of the carbon-fiber-reinforced molded article, and Martens hardness and the amount of plastic deformation which are measured for the measurement layer 35 of the measurement piece Mp are regarded as Martens hardness and the amount of plastic deformation of the composite region 18. In addition, a measurement piece (hereinafter, referred to as "reference measurement piece") prepared under the same conditions as in the measurement piece Mp except that the CNTs 17 are not contained in the measurement layer is used, and Martens hardness and the amount of plastic deformation which are measured for the measurement layer of the reference measurement piece are set as reference Martens hardness and a reference amount of plastic deformation.

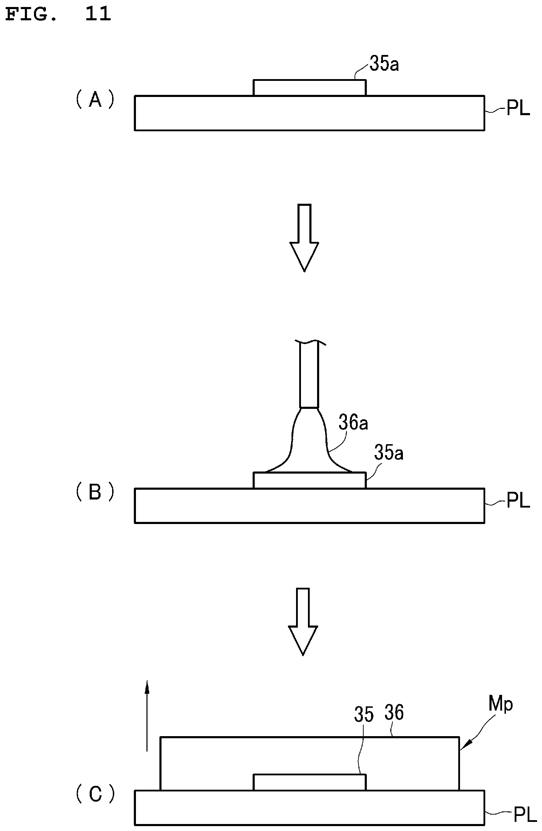

The measurement piece Mp is obtained by forming the measurement layer 35 on a surface layer of a resin layer 36. The thickness t35 of the measurement layer 35 may be set to secure a thickness that does not have an influence on measurement, and may be set to four times an indentation depth at the time of measurement by the nano-indentation method. A length L35 and a width W35 of the measurement layer 35 can be appropriately set as long as these sizes have no influence on measurement. A surface of one piece of the measurement layer 35 is partitioned into a plurality of measurement regions, and measurement can be performed in each of the plurality of measurement regions. A size of the measurement region in this case is set to a size at which measurements in the respective measurement regions have no influence on each other. A thickness t36 of the measurement piece Mp (resin layer 36) is set to ten times or more an indentation depth in order not to receive an influence of a stage of the resin layer 36. A density of the CNTs 17 in the measurement layer 35 is set to be the same as a density of the CNTs 17 in the structure 14. When forming a CNT layer 35a (refer to Fig. 11) as to be described later, the density can be set to be the same as the density of the CNTs 17 in the structure 14.

As illustrated in Fig. 11, in a case of preparing the measurement piece Mp, for example, the CNT layer 35a corresponding to the structure 14 is formed on a stainless steel base plate PL to which a releasing agent is applied (Fig. 11(A)). To form the CNT layer 35a, the same dispersion 28 as in adhesion of the CNTs 17 to the carbon fibers 11 is used, and the dispersion 28 is applied to one surface of the base plate PL to which a releasing agent has been applied, and is dried. According to this, the density of the CNTs 17 of the CNT layer 35a becomes the same as the density of the CNTs 17 in the structure 14. Note that, when causing the CNTs 17 to adhere to the base plate PL, a dispersion obtained by dispersing the CNTs 17 into a dispersion medium having the same properties (viscosity and surface tension) as in the dispersion medium of the dispersion 28 at the same CNT concentration as in the dispersion 28 can also be used instead of the dispersion 28.

Next, a same matrix resin 36a as the carbon fiber molded article (or prepreg 31) is developed on the surface of the base plate PL until reaching a predetermined thickness while being impregnated into the CNT layer 35a (Fig. 11(B)). Next, the matrix resin 36a is cured under the same curing conditions (a pressure, a temperature, and time) as in the carbon-fiber-reinforced molded article. According to this, the CNT layer 35a into which the matrix resin 36a is impregnated is set as the measurement layer 35, another portion of the matrix resin 36a is set as the resin layer 36, and these layers are peeled off from the base plate PL as the measurement piece Mp and are used in measurement (Fig. 11(C)).

Martens hardness and the amount of plastic deformation of the measurement layer 35 are measured by the nano-indentation method conforming to ISO 14577 as described above. The Martens hardness (HM) is obtained as "HM = F/ (AS $\cdot h_{max}^2$)" from a maximum indentation depth ($h_{max}$), a test load (F), and a contact surface area (AS) of an indenter. In addition, the amount of plastic deformation (hp) is obtained as an indentation depth when the test load becomes "0" due to removal of the load.

Measurement conditions are as follows.

- Indenter: Berkovich triangular pyramid indenter (surface angle with respect to an axis is 65.03°)
- Test load: 2.000 mN
- Maximum load holding time: five seconds
- Measurement temperature: 25°C

Note that, the test load is increased to the maximum load over ten seconds, is held at the maximum load for the maximum load holding time, and is removed over 10 seconds. The maximum indentation depth ($h_{max}$) is an indentation depth at the time at which the maximum load holding time expires.

In this example, fixing of the CNTs 17 to the surfaces of the carbon fibers 11 is obtained due to coupling between the carbon fibers 11 and the CNTs 17 by a Vander Waals force, but in addition to this, a binding part configured to reinforce the fixing of the CNTs 17 to the surfaces of the carbon fibers 11 may be formed. For example, the binding part is an epoxy resin that is cured in a state of entering gaps between the carbon fibers 11 and respective (peripheral) surfaces of the CNTs 17 directly adhered (in contact) to the carbon fibers 11. For example, the epoxy resin is dissolved in a solvent such as toluene, xylene, acetone, methyl ethyl ketone, methyl isobutyl ketone (MIBK), butanol, ethyl acetate, and butyl acetate to form a solution, the carbon fiber bundle 12 including the carbon fibers 11 on which the structure 14 is formed is immersed in the solution, and heating is performed. According to this, the epoxy resin that is not cured is caused to enter gaps formed between the carbon fibers 11 and the respective surfaces of the CNTs 17, and the epoxy resin is cured.

Note that, when forming the binding part, an epoxy resin solution that is a material of the binding part may be used in a state of an emulsion. For example, an emulsifier such as a nonionic emulsifier may be added to the solution obtained by dissolving the epoxy resin in the solvent to obtain the emulsion. In addition to the epoxy resin, the binding part may be formed by, for example, a phenol resin, a polyurethane resin, a melamine resin, a urea resin, a polyimide resin, or the like. In addition, a silane coupling agent or inorganic adhesive may also be used as the binding part.

The CNTs 17 may be partially fixed to the surfaces of the carbon fibers 11. In this configuration, the cured fixing resin part is scattered on the surfaces of the carbon fibers 11, and some CNTs 17 forming the structure 14 are fixed to the surfaces of the carbon fibers 11 by the fixing resin part. It is preferable that a ratio of the surfaces of the carbon fibers 11 which are covered by the fixing resin part on the surfaces of the carbon fibers 11 is within a range of 7% to 30%. The composite material in which some CNTs 17 are fixed by the fixing resin part that is scattered as described above can sufficiently exhibit the effect of the CNTs 17, and it is possible to further enhance resistance to progression of interlayer peeling cracks in the carbon-fiber-reinforced molded article using the composite material.

For example, the fixing resin part can be formed by applying an emulsion-type treatment liquid containing a liquid droplet-shaped resin having a particle size of 0.05 to 1 $\mu$m, and curing the resin. The particle size can be obtained by a laser analysis method. Examples of the resin include a reactive resin.

Examples

A carbon-fiber-reinforced molded article (test piece) that is used in Example 2 to be described later was prepared from the composite material 10 through the prepreg 31, and properties of the carbon-fiber-reinforced molded article were evaluated. The composite material 10 was produced in the above-described procedure. In addition, in Example 1, an adhesion state of the CNTs 17 to the carbon fibers 11 of the produced composite material 10, an adhesion state of the sizing agent 15, and the like were evaluated.

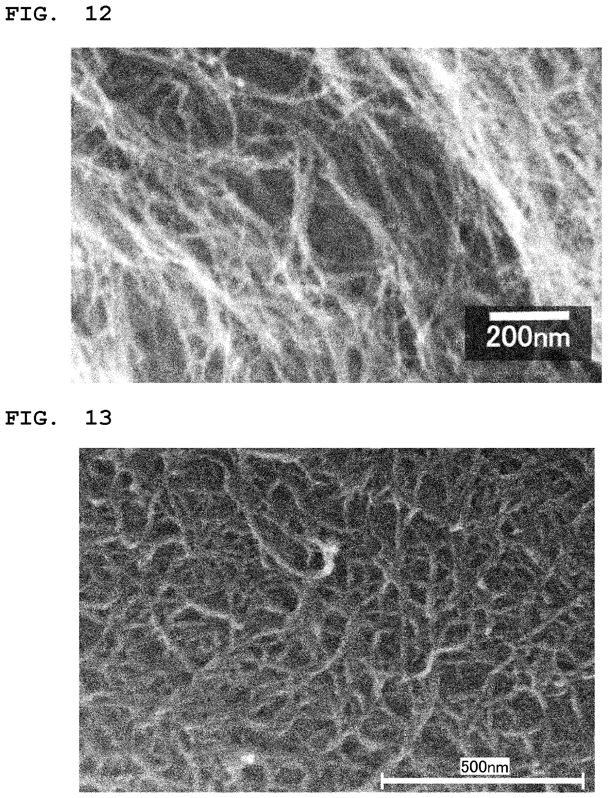

The dispersion 28 that was used when manufacturing the composite material 10 was prepared by using the material CNT having the bent shape as described above. A SEM photograph of the material CNT used in preparation of the dispersion 28 is shown in Fig. 12. The material CNT was formed in a multi-layer structure, and a diameter was within a range of 3 nm to 10 nm. The material CNT was washed with 3:1 mixed acid of sulfuric acid and nitric acid to remove a catalytic residue, and was filtered and dried. The material CNT was added to acetone as the dispersion medium of the dispersion 28, and the material CNT was cut by using an ultrasonic homogenizer to obtain the CNTs 17. A length of the CNTs 17 in the dispersion 28 was 0.2 to 5 $\mu$m. In addition, the CNTs 17 in the dispersion 28 could be evaluated as having the bent shape.

The concentration of the CNTs 17 in the dispersion 28 was set to 0.12 wt% (= 1,200 wt ppm). A dispersing agent or adhesive was not added to the dispersion 28.

As the carbon fiber bundle 12, T700SC-12000 (manufactured by Toray Industries, Inc.) was used. The carbon fiber bundle 12 includes 12,000 carbon fibers 11. A diameter of the carbon fibers 11 is approximately 7 $\mu$m, and a length thereof is approximately 100 m. Note that, in the carbon fiber bundle 12, the sizing agent for preventing entanglement of the carbon fibers 11 was removed from the surfaces of the carbon fibers 11 before adhesion of the CNTs 17.

In a state of being opened, the carbon fiber bundle 12 was wound around the guide rollers 23 to 26 and was travelled in the dispersion 28 contained in the CNT adhesion tank 22. A travelling speed of the carbon fiber bundle 12 was set to 1 m/minute, and ultrasonic vibration having a frequency of 200 kHz was applied to the dispersion 28 with the ultrasonic wave generator 27. Note that, immersion time for which the carbon fiber bundle 12 travels between the guide rollers 24 and 25 was set to 6.25 seconds. The immersion time corresponds to 1,250,000 cycles of the ultrasonic vibration applied to the dispersion 28. In the dispersion 28, the carbon fiber bundle 12 was caused to travel at a depth D from a liquid surface of the dispersion 28 satisfying a relationship of "D = n· ($\lambda$/2) ".

In production of the composite material 10, the carbon fiber bundle 12 taken out from the dispersion 28 was dried, and the sizing treatment was performed by using an epoxy resin as the sizing agent 15 to cause the sizing agent 15 to adhere to the surfaces of the CNTs 17 constituting the structure 14. In the sizing treatment, a concentration of a resin in a solution to which the resin becoming the sizing agent 15 was dissolved was adjusted so that the sizing agent 15 that adheres to the CNTs 17 of the structure 14 becomes 30% or less in a volume ratio. The carbon fiber bundle 12 subjected to the sizing treatment was dried to obtain the composite material 10.

When producing the carbon-fiber-reinforced molded article from the composite material 10, the prepreg 31 was manufactured by opening the composite material 10 manufactured as described above, and by impregnating the composite material 10 with an epoxy resin as the matrix resin 32 in a state of being opened. A volume content rate of the matrix resin 32 in the prepreg 31 was 30%. In addition, the weight per unit area of the composite material 10 in the prepreg 31 was set to 180 g/m$^2$. 10 to 16 carbon fibers 11 existed in the prepreg 31 in a thickness direction. In addition, the carbon-fiber-reinforced molded article was manufactured by heating a laminated body obtained by laminating the prepreg 31 while pressing the laminated body. In the pressing and heating, an autoclave (DANDELION, manufactured by HANYUDA. CO. JP.) was used. Note that, details of the manufactured carbon-fiber-reinforced molded article will be described later.

In addition, as a comparison prepreg to be described later, a prepreg using a carbon fiber bundle in which the CNT does not adhere to each carbon fiber was prepared. In Comparison Example 1, a carbon-fiber-reinforced molded article was prepared by using the comparison prepreg.

Conditions in the comparison prepreg are the same as in the prepreg 31 for the example except for presence or absence of adhesion of the CNT. In addition, production conditions of the carbon-fiber-reinforced molded article using the comparison prepreg was set to be the same as the carbon-fiber-reinforced molded article using the prepreg of each example except that the prepreg is different in each case.

<Example 1>

SEM Observation

A part of the carbon fiber bundle 12 after the sizing treatment and drying was cut to obtain the carbon fibers 11. It was confirmed that a plurality of CNTs 17 adhered to each of the obtained carbon fibers 11 in a state of being uniformly dispersed through SEM observation.

It was confirmed that the CNTs 17 uniformly adhered to the carbon fibers 11 of the carbon fiber bundle 12 both in a narrow range (local) in a fiber axis direction thereof and in a wide range. In addition, it could be confirmed that more CNTs 17 adhered to the carbon fibers 11 in comparison to the case of causing linear CNTs to adhere to carbon fibers.

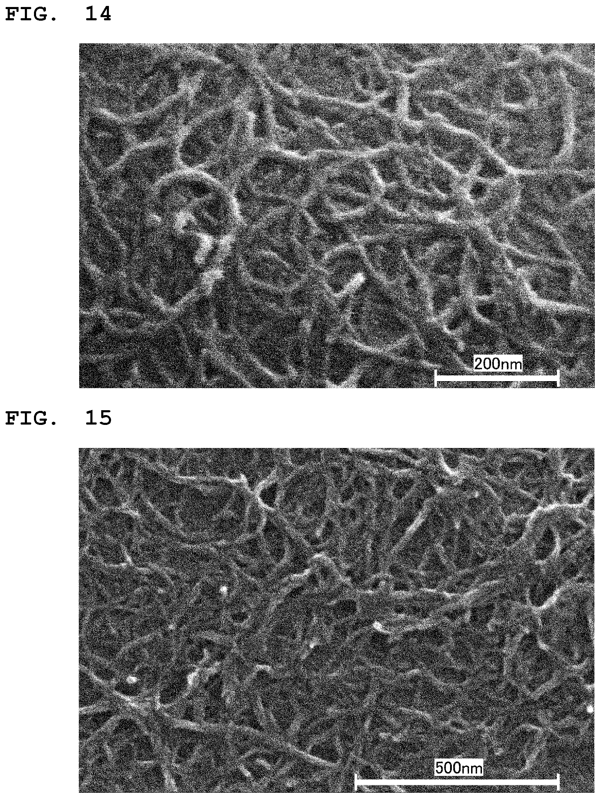

SEM photographs obtained by photographing the surface of the structure 14 of the carbon fiber bundle 12 prepared as described above are shown in Fig. 13 and Fig. 14. Note that, an SEM image in Fig. 14 is an image obtained by increasing the magnification from the SEM photograph in Fig. 13. As can be seen from the SEM photographs, it can be seen that the structure 14 is formed in a three-dimensional mesh structure including a plurality of CNTs 17, that is, in a non-woven fabric shape including the void portion 19. In addition, in the structure 14, since a volume ratio of the sizing agent 15 to the CNTs 17 of the structure 14 was adjusted to be 30% or less, it was confirmed that the CNTs 17 were fixed to each other with the sizing agent 15, but the majority of void portions 19 were not closed by the sizing agent 15, and the matrix resin can be easily impregnated into the structure 14. From a case of obtaining the structure 14 in Fig. 13, in the structure 14 in which the volume ratio of the sizing agent 15 to the CNTs 17 was slightly increased to approximately 40%, the void portion 19 closed by the sizing agent 15 as shown in the SEM photograph in Fig. 15 was confirmed. According to this, in a case where the volume ratio of the sizing agent 15 was excessively high, it was confirmed that the void portion 19 closed by the sizing agent 15 increases, and impregnation of the matrix resin into the structure 14 becomes difficult.

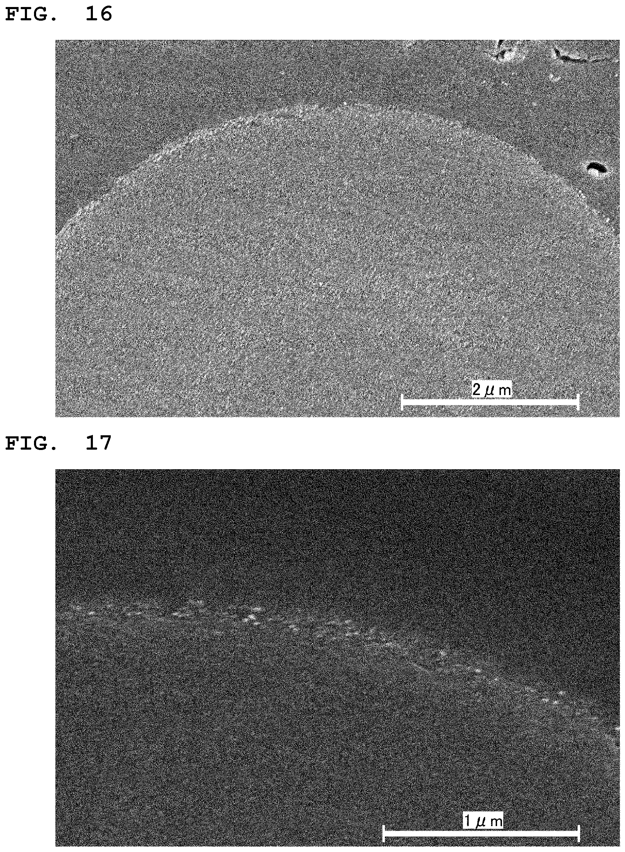

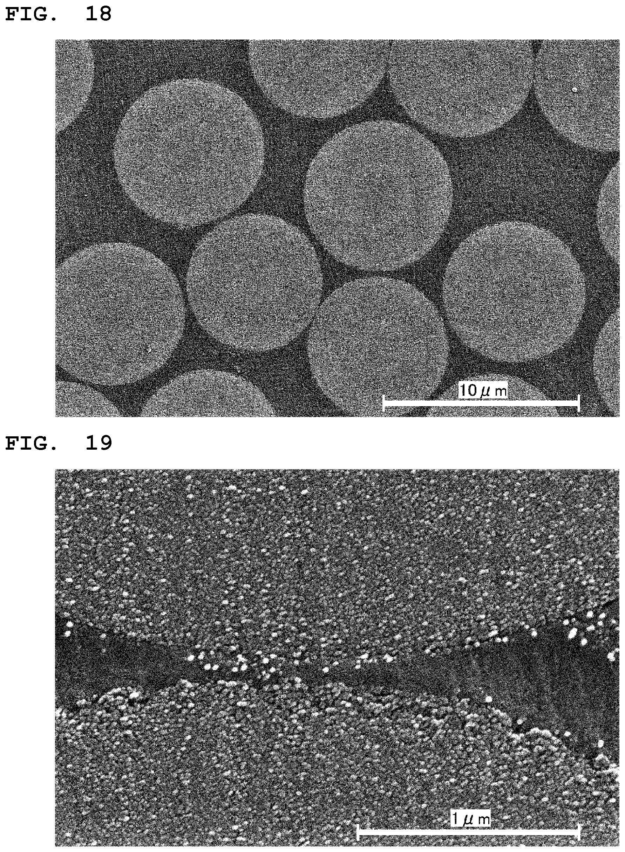

In addition, a cross-section of the carbon fibers 11 in which the epoxy resin was impregnated into the structure 14 was observed with a SEM. A SEM photograph at this time is shown in Fig. 16 to Fig. 19. From the SEM photographs in Fig. 16 and Fig. 17, it can be seen that the structure 14 is formed in a thickness of 100 nm or greater. Note that, the SEM photograph in Fig. 17 is a photograph obtained by enlarging a part of the cross-section in Fig. 16. In addition, from the SEM photograph in Fig. 18, it can be seen that a cross-sectional shape of the carbon fiber 11 including the structure 14 is close to a perfect circle, diameters thereof are approximately the same as each other, and the structure 14 is uniformly formed on the surfaces of the carbon fibers 11. In addition, as can be seen from the SEM photograph in Fig. 18, it can be seen that the carbon fibers 11 which are in contact with each other exist in the carbon fiber bundle 12. As shown in the SEM photograph in Fig. 19, it can be seen that a cross-linking structure in which parts of each composite region 18 are fixed to each other to cross-link the carbon fibers 11 to each other is provided between the carbon fibers 11 which are in contact with each other.

<Example 2>

(Evaluation of Fatigue Property)

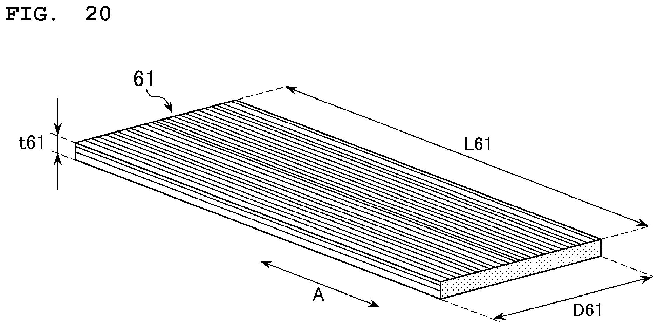

In Example 2, as illustrated in Fig. 20, a plate-shaped test piece 61 was manufactured as the carbon-fiber-reinforced molded article, and three-point bending fatigue test was performed to evaluate a bending fatigue property and a bending property was confirmed by a three-point bending test. The test piece 61 of Example 2 was produced to have a length L61 of 20 mm or longer, a width D61 of 15 mm, and a thickness t61 of 1.8 mm. In production of the test piece 61, 16 sheets of prepregs 31 cut into a rectangle (L61×D61) were laminated, and the resultant laminated body was heated at 145°C for one hour while being pressed to cure the matrix resin 32. The prepregs 31 were cut so that a longitudinal direction matches the fiber axis direction of the carbon fibers 11. Accordingly, in the test piece 61, fiber axis directions (directions indicated by an arrow A in the drawing) of all carbon fibers 11 match the longitudinal direction. As the test piece 61, 14 sheets were manufactured, and 13 sheets were used in evaluation of the bending fatigue property, and the remaining one sheet was used in evaluation of the bending property.

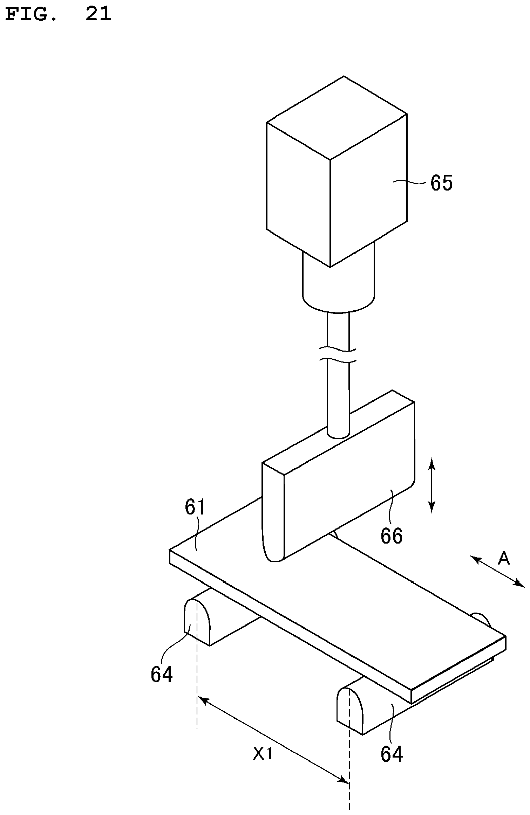

The three-point bending fatigue test was performed by using a servo pulse EHF-LB-5kN (manufactured by SHIMADZU CORPORATION) as a test device. As illustrated in Fig. 21, the test piece 61 was set to the test device so that the test piece 61 was supported from a lower side by a pair of supporting points 64 disposed to be spaced apart from each other along a longitudinal direction of the test piece 61, and the test piece 61 was pressed downward by an indenter 66 disposed on an upward side of the center (a position equally spaced from the supporting points 64) of the pair of supporting points 64 while measuring a load with a load cell 65. An inter-supporting-point distance X1 between the pair of supporting points 64 was set to 20 mm.

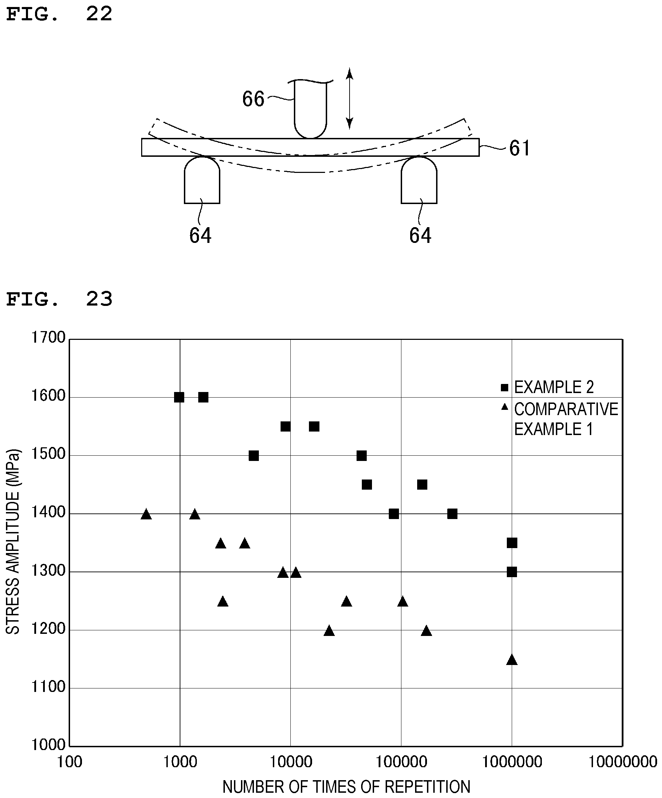

As illustrated in Fig. 22, the indenter 66 was made to vertically descend from a position where the indenter 66 was brought into contact with the test piece 61 to deform the test piece 61 to a downward side, and at a point of time at which a stress due to the load reached a predetermined value (stress amplitude), the indenter 66 was made to ascend up to a position where the load reached "0" to release the pressing, and then the indenter 66 was made to vertically descend. This operation was repeated. A vertical movement frequency of the indenter 66 was adjusted for each test piece 61 within a range of 10 to 20 Hz in order for the test piece 61 not to be damped. In this manner, the three-point bending fatigue test by pulsating was performed, and the number of times of repetition until the load reached "0" when the indenter 66 was made to vertically descend was counted. In Example 2, four sheets of test pieces 61 were manufactured, and the number of times of repetition was counted while changing the stress amplitude. Results of Example 2 are illustrated in Fig. 23.

As comparative Example 1, a carbon-fiber-reinforced molded article was manufactured by using the comparison prepreg, and with respect to a test piece as the carbon-fiber-reinforced molded article using the comparison prepreg, the three-point bending fatigue test was performed to evaluate the bending fatigue property. As the test piece of Comparison Example 1, 13 sheets were manufactured, 12 sheets were used in evaluation of the bending fatigue property, and the remaining one sheet was used in evaluation of the bending property. The test pieces of Comparative Example 1 were manufactured in the same procedure and in the same size as in the test piece 61 of Example 2. 16 sheets of comparison prepregs were laminated and the resultant laminated body was heated while being pressed to cure the matrix resin. Conditions of the three-point bending fatigue test of Comparative Example 1 were set to be the same as in Examples 2. Results of the three-point bending fatigue test of the test pieces of the Comparative Example 1 are illustrated in Fig. 23.

As can be seen from a graph in Fig. 23, in a case where the stress amplitude is the same, in the test pieces 61 of Example 2, the number of times of repetition is greater by two or more digits and a fatigue lifetime is longer in comparison to the test pieces of Comparative Example 1 in which the CNTs do not adhere to the carbon fibers.

In addition, a bending strain was investigated by a three-point bending test with respect to each of the test pieces in Example 2 and Comparative Example 1. In the three-point bending test, as in the three-point bending fatigue test, the test piece was supported from a lower side by setting an inter-supporting-point distance to 20 mm, and was bent by a pulsating load due to vertical movement of the indenter. In addition, a maximum bending stress was set to 1,200 MPa, and load control was performed so that a load waveform becomes a sinusoidal wave. A repetition frequency of the load was set to three kinds of 1 Hz, 10 Hz, and 20 Hz. Actual width and thickness of each test piece used in the bending strain measurement, a load at the maximum bending stress, and a bending elastic modulus for each repetition frequency which was measured in combination are shown in Table 1.

[Table 1]

|  |  | Example 2 | Comparative Example 1 |
|---|---|---|---|
| Width of test piece (mm) |  | 15.336 | 15.087 |
| Thickness of test piece (mm) |  | 1.780 | 1.748 |
| Load at maximum bending stress (kN) |  | 1.944 | 1.844 |
| Bending elastic modulus (GPa) | 1 Hz | 0.983 | 0.987 |
|  | 10 Hz | 1.018 | 1.027 |
|  | 20 Hz | 1.050 | 1.051 |

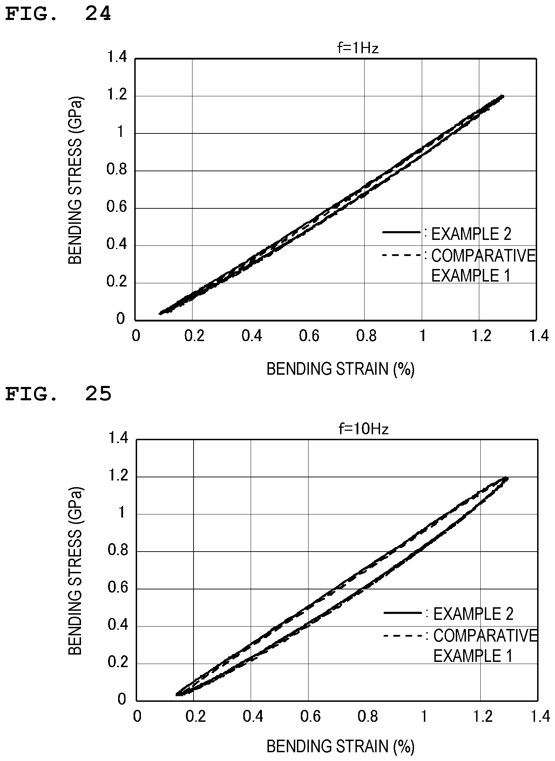

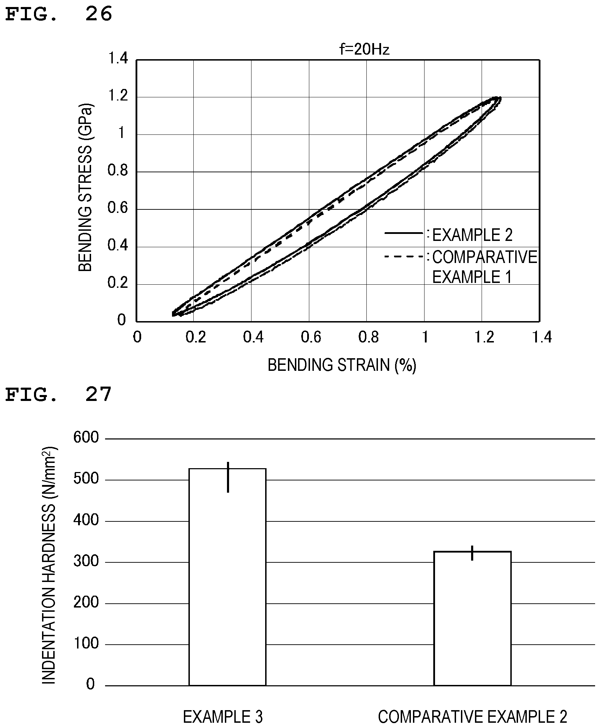

A relationship between the bending stress and the bending strain which were obtained from the three-point bending test and related to each repetition frequency is shown in Fig. 24 to Fig. 26. Fig. 24 illustrates a case where the repetition frequency (f) is 1 Hz, Fig. 25 illustrates a case where the repetition frequency (f) is 10 Hz, and Fig. 26 illustrates a case where the repetition frequency (f) is 20 Hz. From the results, it was confirmed that in the test pieces 61 of Example 2, a similar bending deformation as in the test pieces of Comparative Example 1 occurs with respect to the load. That is, it was confirmed from the results of the three-point bending test that an improvement of the bending fatigue property is not caused by the fact that bending is less likely to occur in the test piece 61.

<Example 3>

Martens hardness, indentation hardness, and the amount of plastic deformation of the composite region 18 were measured by the nano-indentation method conforming to ISO 14577. For the measurement, 27 sheets of measurement pieces Mp were manufactured in the above-described manufacturing procedure. Since the matrix resin of the carbon fiber molded article was the epoxy resin, the measurement pieces Mp were manufactured by using the same epoxy resin. In addition, in the measurement layer 35 of each of the measurement pieces Mp, the length L35 was set to 10 mm, the width W35 was set to 10 mm, and the thickness t35 was within a range of 2 to 3 pm. The thickness t36 of the resin layer 36 was 90 pm.

Measurement of Martens hardness, indentation hardness, and the amount of plastic deformation was performed by using "an ultra-micro indentation hardness tester (ENF-1100S manufactured by ELIONIX INC.) " in accordance with the procedure in the nano-indentation method (ISO 14577). The Martens hardness (HM), the indentation hardness ($H_{IT}$), and the amount of plastic deformation (hp) which were measured for the measurement layer 35 of each measurement piece Mp are shown in Table 2.

[Table 2]

| No. | Example 3 | | | Comparative Example 2 | | |
|---|---|---|---|---|---|---|
| | HM (N/mm$^2$) | $H_{IT}$ (N/mm$^2$) | hp ($\mu$m) | HM (N/mm$^2$) | $H_{IT}$ (N/mm$^2$) | hp ($\mu$m) |
| 1 | 308.1 | 538.2 | 0.16811 | 208.2 | 307.2 | 0.30853 |
| 2 | 307.1 | 548.1 | 0.17395 | 215.6 | 316.9 | 0.29470 |
| 3 | 327.2 | 568.6 | 0.16055 | 219.1 | 324.3 | 0.29909 |
| 4 | 326.3 | 580.2 | 0.15281 | 215.8 | 321.3 | 0.29744 |
| 5 | 320.7 | 557.5 | 0.16302 | 216.6 | 321.3 | 0.29966 |
| 6 | 296.5 | 518.3 | 0.16843 | 219.5 | 328.5 | 0.29407 |
| 7 | 301.2 | 522.2 | 0.17020 | 218.9 | 326.5 | 0.29486 |
| 8 | 317.8 | 562.1 | 0.15753 | 221.9 | 328.7 | 0.29557 |
| 9 | 322.4 | 569.2 | 0.15760 | 219.8 | 324.5 | 0.29564 |
| 10 | 294.5 | 508.7 | 0.17984 | 212.8 | 320.2 | 0.29483 |
| 11 | 305.5 | 536.3 | 0.16830 | 206.8 | 306.6 | 0.30664 |
| 12 | 312.9 | 555.5 | 0.16122 | 213.5 | 316.8 | 0.29951 |
| 13 | 309.6 | 542.0 | 0.16557 | 219.8 | 327.0 | 0.29301 |
| 14 | 300.0 | 529.3 | 0.16747 | 219.6 | 330.3 | 0.28748 |
| 15 | 288.9 | 496.6 | 0.17540 | 216.7 | 324.8 | 0.29113 |
| 16 | 301.7 | 520.9 | 0.16839 | 221.8 | 331.2 | 0.28958 |
| 17 | 289.0 | 500.0 | 0.17638 | 221.8 | 314.9 | 0.29507 |
| 18 | 300.1 | 516.6 | 0.17456 | 215.2 | 321.9 | 0.29286 |
| 19 | 301.5 | 519.0 | 0.16919 | 218.9 | 327.4 | 0.29068 |
| 20 | 284.9 | 512.3 | 0.17293 | 224.6 | 339.5 | 0.28178 |
| 21 | 288.1 | 491.6 | 0.17685 | 218.5 | 331.0 | 0.28338 |
| 22 | 293.3 | 508.7 | 0.17417 | 219.5 | 335.8 | 0.28036 |

(continued)

| No. | Example 3 | | | Comparative Example 2 | | |
|---|---|---|---|---|---|---|
| | HM (N/mm$^2$) | H$_{IT}$ (N/mm$^2$) | hp ($\mu$m) | HM (N/mm$^2$) | H$_{IT}$ (N/mm$^2$) | hp ($\mu$m) |
| 23 | 299.5 | 508.4 | 0.17260 | 224.5 | 340.8 | 0.27762 |
| 24 | 303.6 | 525.7 | 0.16961 | 215.5 | 330.0 | 0.28979 |
| 25 | 298.0 | 514.7 | 0.17414 | 233.3 | 336.3 | 0.28237 |
| 26 | 292.9 | 505.0 | 0.17145 | 219.7 | 337.5 | 0.28010 |
| 27 | 306.9 | 531.3 | 0.16507 | 222.9 | 339.1 | 0.27978 |
| Average | 303.6 | 529.1 | 0.16872 | 218.5 | 326.3 | 0.29169 |

As Comparison Example 2, measurement was performed with respect to each of the 27 sheets of measurement pieces manufactured under the same conditions as in the measurement piece Mp except that the CNTs 17 are not included. The measurement results are shown in Table 2. Note that, Martens hardness and the amount of plastic deformation measured with respect to Comparative Example 2 become reference Martens hardness and a reference amount of plastic deformation for

Example 3.

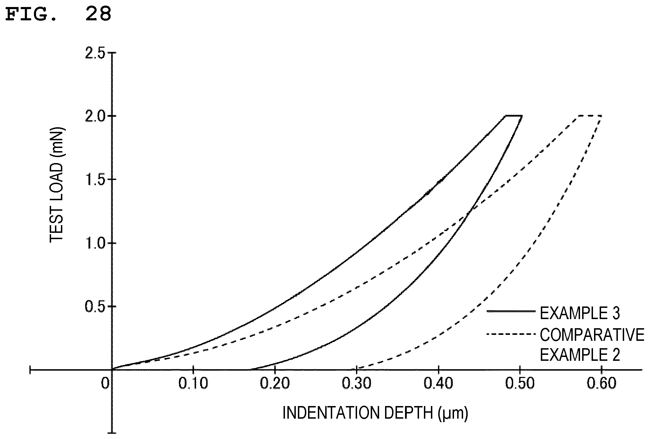

In addition, an average of the indentation hardness in Example 3 and Comparative Example 2 is shown as a graph in Fig. 27. In addition, an average loading curve and an average unloading curve of each measurement piece in Example 3 and Comparative Example 2 when performing measurement of the Martens hardness and the indentation hardness are respectively shown in Fig. 28.

From the measurement results, it can be seen that the Martens hardness of the composite region 18 in Example 3 is greater than the Martens hardness in Comparative Example 2 by 10% or greater. In addition, in the composite region 18, it can be seen that the amount of plastic deformation becomes 70% or less of the amount of plastic deformation in Comparative Example 2.

From Table 2, Fig. 27, and Fig. 28, it can be seen that the composite region 18 formed at the periphery of the carbon fibers 11 is less likely to be deformed and plastic deformation thereof is less likely to occur in comparison to the matrix resin alone. According to this, it can be seen that coupling between the carbon fibers 11 becomes stronger by mutual coupling of composite regions 18, and fatigue for a mechanical deformation of the carbon-fiber-reinforced molded article is less likely to occur.

<Example 4>

The similar measurement piece Mp as in Example 3 was manufactured, and a frictional wear test was performed by a reciprocating sliding type frictional wear tester. In the test, the measurement piece Mp was made to reciprocate in a state in which the indenter was pressed against the surface of the measurement layer 35 of the measurement piece Mp at a predetermined load in order for the indenter to slide on the measurement piece Mp. The number of times of reciprocation until a coefficient of dynamic friction between the indenter and the measurement layer 35 exceeds 0.1 was counted. Similarly, the number of times of reciprocation until the coefficient of dynamic friction exceeds 0.1 was also counted with respect to a measurement layer that does not include the CNT. The number of times of reciprocation until the coefficient of dynamic friction exceeds 0.1 was 80 times in the measurement layer that does not include the CNT, and was 240 times in the measurement layer 35. From the test results, it can be seen that the wear resistance of the composite region 18 is high.

Reference Sign List

10: Composite material
11: Carbon fiber
12: Carbon fiber bundle
14: Structure

17: Carbon nanotube
18: Composite region
34: Carbon-fiber-reinforced molded article

**Claims**

1. A composite material, comprising:

   a carbon fiber bundle including a plurality of continuous carbon fibers; and
   a structure formed on each of the carbon fibers which includes a plurality of carbon nanotubes and has a network structure in which the carbon nanotubes are in direct contact with each other, and in which the carbon nanotubes directly adhere to surfaces of the carbon fibers,
   wherein the carbon nanotubes have a bent shape including a bent portion, and
   a thickness of the structure is within a range of 50 nm to 200 nm.

2. A method for manufacturing a composite material, comprising:

   an ultrasonic process of applying ultrasonic vibration to a dispersion in which a plurality of carbon nanotubes having a bent shape including a bent portion are dispersed; and
   an adhesion process of immersing a carbon fiber bundle including a plurality of continuous carbon fibers in the dispersion to which the ultrasonic vibration is applied, and adhering the plurality of carbon nanotubes to the carbon fibers to form a structure on a surface of each of the carbon fibers,
   wherein in the adhesion process, the carbon fiber bundle is immersed while being opened, the carbon fibers are traveled in the dispersion, and when a depth from a liquid surface of the dispersion in which the carbon fibers travel is set as D, a wavelength of a standing wave of ultrasonic vibration generated in the dispersion due to the ultrasonic process is set as $\lambda$, and n is set as an integer of 1 or more, a relationship of $n \cdot \lambda/2 - \lambda/8 \leq D \leq n \cdot \lambda/2 + \lambda/8$ is satisfied.

3. A carbon-fiber-reinforced molded article, comprising:

   a carbon fiber bundle including a plurality of continuous carbon fibers;
   a matrix resin that is cured in a state of being impregnated into the carbon fiber bundle;
   a composite region having a thickness within a range of 50 nm to 200 nm including;

   a structure formed on each of the carbon fibers which includes a plurality of carbon nanotubes having a bent shape including a bent portion and has a network structure in which the carbon nanotubes are in direct contact with each other, and in which the carbon nanotubes directly adhere to surfaces of the carbon fibers; and
   the matrix resin that is cured in a state of being impregnated into the structure; and

   a cross-linking portion in which parts of the composite region between the carbon fibers are fixed to each other to cross-link the carbon fibers to each other.

4. The carbon-fiber-reinforced molded article according to claim 3,
   wherein Martens hardness of the composite region which is measured in conformity to ISO 14577 is greater than Martens hardness of the matrix resin by 10% or more.

5. The carbon-fiber-reinforced molded article according to claim 3,
   wherein the amount of plastic deformation of the composite region which is measured in conformity to ISO 14577 is 70% or less of the amount of plastic deformation of the matrix resin.

FIG. 1

FIG. 2

FIG. 3

FIG. 4

EP 4 063 558 A1

FIG. 5

FIG. 6

SOUND PRESSURE

$\lambda/2$

$3\lambda/2$

$\lambda$

28

22

25

27

24

12

FIG. 7

FIG. 8

## FIG. 9

## FIG. 10

FIG. 11

(A)

35a

PL

(B)

36a

35a

PL

(C)

35  36

Mp

PL

FIG. 12

FIG. 13

FIG. 14

FIG. 15

FIG. 16

2 μm

FIG. 17

1 μm

FIG. 18

FIG. 19

FIG. 20

FIG. 21

FIG. 22

FIG. 23

FIG. 24

FIG. 25

FIG. 26

FIG. 27

FIG. 28

## INTERNATIONAL SEARCH REPORT

| International application No. |
|---|
| PCT/JP2020/042900 |

A. CLASSIFICATION OF SUBJECT MATTER
D06M 10/02(2006.01)i; B29C 70/16(2006.01)i; D06M 11/74(2006.01)i
FI: D06M11/74; D06M10/02 A; B29C70/16

According to International Patent Classification (IPC) or to both national classification and IPC

B. FIELDS SEARCHED

Minimum documentation searched (classification system followed by classification symbols)
D06M10/00-11/84; D06M16/00; D06M19/00-23/18; B29C70/16

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-194165 A (NITTA CORP.) 17 November 2016 (2016-11-17) claims, paragraphs [0017]-[0037], drawings | 1–5 |
| Y | JP 2008-201626 A (TORAY INDUSTRIES, INC.) 04 September 2008 (2008-09-04) claims, paragraph [0006] | 1–5 |
| Y | US 2018/0230634 A1 (REDDY, Konreddy Venkat) 16 August 2018 (2018-08-16) claims, paragraphs [0002], [0014], [0038]-[0042], fig. 4 | 2 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 January 2021 (07.01.2021) | 19 January 2021 (19.01.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

### INTERNATIONAL SEARCH REPORT
Information on patent family members

International application No.

PCT/JP2020/042900

| Patent Documents referred in the Report | Publication Date | Patent Family | Publication Date |
|---|---|---|---|
| JP 2016-194165 A | 17 Nov. 2016 | US 2018/0119332 A1 claims, fig.s WO 2016/159122 A1 EP 3279394 A1 TW 201702292 A CN 107429477 A KR 10-2017-0131391 A | |
| JP 2008-201626 A | 04 Sep. 2008 | (Family: none) | |
| WO 2018/0230634 A1 | 16 Aug. 2018 | WO 2017/025867 A1 EP 3332058 A1 | |

Form PCT/ISA/210 (patent family annex) (January 2015)

**EP 4 063 558 A1**

**REFERENCES CITED IN THE DESCRIPTION**

**Patent documents cited in the description**

- JP 2013076198 A